(19) Europäisches Patentamt
European Patent Office
Office européen des brevets

(11) EP 4 333 096 A1

(12) EUROPEAN PATENT APPLICATION
published in accordance with Art. 153(4) EPC

(43) Date of publication:
**06.03.2024 Bulletin 2024/10**

(21) Application number: **22795821.2**

(22) Date of filing: **26.04.2022**

(51) International Patent Classification (IPC):
***H01M 4/13*** *(2010.01)* ***H01M 4/139*** *(2010.01)*
***H01M 10/058*** *(2010.01)*

(52) Cooperative Patent Classification (CPC):
**H01M 4/13; H01M 4/139; H01M 10/058;**
Y02E 60/10; Y02P 70/50

(86) International application number:
**PCT/JP2022/018968**

(87) International publication number:
**WO 2022/230908 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.04.2021 JP 2021076704**

(71) Applicant: **Zeon Corporation**
**Tokyo 100-8246 (JP)**

(72) Inventors:
- **MARUHASHI Yutaka**
**Tokyo 100-8246 (JP)**
- **SATO Masanobu**
**Tokyo 100-8246 (JP)**

(74) Representative: **Maiwald GmbH**
**Elisenhof**
**Elisenstraße 3**
**80335 München (DE)**

(54) **COMPOSITION FOR NONAQUEOUS SECONDARY BATTERY ADHESIVE LAYER, NONAQUEOUS SECONDARY BATTERY ADHESIVE LAYER AND METHOD FOR PRODUCING SAME, LAMINATE FOR NONAQUEOUS SECONDARY BATTERY AND METHOD FOR PRODUCING SAME, AND NONAQUEOUS SECONDARY BATTERY**

(57) Disclosed is an adhesive layer for non-aqueous secondary battery, which can strongly bond battery members to each other by pressurization at normal temperature while ensuring inkjet discharge characteristics, and to provide a composition for non-aqueous secondary battery adhesive layer, which can allow a non-aqueous secondary battery to exert excellent battery characteristics. The presently disclosed composition for non-aqueous secondary battery adhesive layer is a composition for non-aqueous secondary battery adhesive layer including a particulate polymer, the particulate polymer has a core-shell structure that includes a core portion and a shell portion partially covering an outer surface of the core portion, and the shell portion is formed of a polymer including an alkylene oxide group-containing monomer unit.

FIG. 1

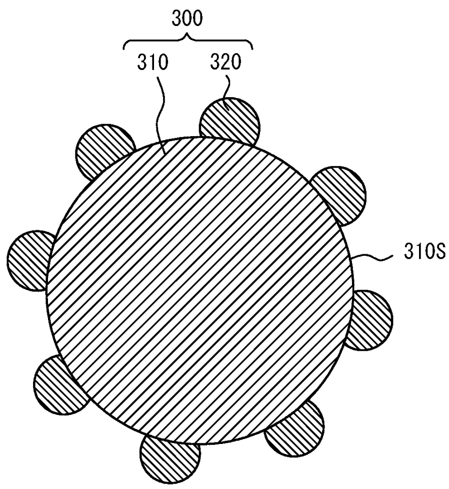


EP 4 333 096 A1

## Description

TECHNICAL FIELD

This disclosure relates to a composition for non-aqueous secondary battery adhesive layer, an adhesive layer for non-aqueous secondary battery and a method of producing the same, a laminate for non-aqueous secondary battery and a method of producing the same, and a non-aqueous secondary battery.

BACKGROUND

Non-aqueous secondary batteries (hereinafter, also referred to as "secondary batteries") such as lithium ion secondary batteries have characteristics such as compact size, light weight, high energy-density, and the ability to be repeatedly charged and discharged, and are used in a wide variety of applications. A secondary battery generally includes battery members, such as a positive electrode, a negative electrode, and a separator that separates the positive and negative electrodes from each other to prevent a short circuit between the positive and negative electrodes.
Battery members that include an adhesive layer for improving adhesiveness between battery members have been used in secondary batteries. Specific examples of such battery members include electrodes which further include an adhesive layer formed on an electrode substrate formed of a current collector and of an electrode mixed material layer formed on the current collector; and separators which include an adhesive layer formed on a separator substrate. An adhesive layer such as mentioned above is normally formed by supplying, onto a substrate such as an electrode substrate or a separator substrate, a composition for non-aqueous secondary battery adhesive layer (hereinafter, also referred to as a "composition for adhesive layer") that is in the form of a slurry containing a binder component and a solvent such as water, and then drying the composition for adhesive layer.
In recent years, to allow a secondary battery to exert excellent battery characteristics while achieving strong bonding between battery members and further to increase the production efficiency of the secondary battery, it has been studied to form an adhesive layer (adhesive material) by discharging the composition for adhesive layer as fine droplets from a nozzle by an inkjet method.
For example, Patent Literature (PTL) 1 describes applying a slurry for non-aqueous secondary battery, which contains a particulate polymer having a core-shell structure, a predetermined amount of polyhydric alcohol compound, and water, by an inkjet method. PTL 1 also reports that, by using the slurry for non-aqueous secondary battery, even when the inkjet method is adopted, a battery member surface can be efficiently provided with an adhesive material while ensuring strong bonding between battery members and excellent low-temperature output characteristics of a secondary battery.
PTL 2 describes applying a composition for adhesive layer, which contains organic particles having a core-shell structure, a thixotropic agent, and water and satisfies predetermined properties, by an inkjet method. PTL 2 also reports that, by using the composition for adhesive layer, even when the inkjet method is adopted, an adhesive layer can be well formed, and a substrate and a bonded body can be strongly bonded to each other via the adhesive layer.

CITATION LIST

Patent Literature

PTL 1: WO2019221056A
PTL 2: WO2020045246A

SUMMARY

(Technical Problem)

However, according to the consideration by the inventors, it became clear that a slurry for non-aqueous secondary battery and a composition for adhesive layer according to conventional techniques such as mentioned above can be well applied onto a battery member by the inkjet method, but when battery members are affixed to each other by pressurization at normal temperature via an adhesive layer (adhesive material) formed by drying the composition for adhesive layer applied in the production process of secondary batteries, the adhesive force between the battery members is not sufficient, which hurts the productivity of secondary batteries and further reduces the battery characteristics.
In other words, there is still room for improvement over the conventional technique described above from a

viewpoint of strongly bonding battery members to each other by pressurization at normal temperature while ensuring inkjet discharge characteristics, and of providing secondary batteries with excellent battery characteristics.

It could be helpful to provide an adhesive layer for non-aqueous secondary battery, which can strongly bond battery members to each other by pressurization at normal temperature while ensuring inkjet discharge characteristics, and to provide a composition for non-aqueous secondary battery adhesive layer, which can allow a non-aqueous secondary battery to exert excellent battery characteristics.

It could be also helpful to provide an adhesive layer for non-aqueous secondary battery, which can strongly bond battery members to each other by pressurization at normal temperature and allow a non-aqueous secondary battery to exert excellent electrical characteristics.

It could be also helpful to provide a laminate for non-aqueous secondary battery, which can allow a non-aqueous secondary battery to exert excellent electrical characteristics.

It could be also helpful to provide a non-aqueous secondary battery with excellent electrical characteristics.

It could be also helpful to provide a method of producing an adhesive layer for non-aqueous secondary battery, which can strongly bond battery members to each other by pressurization at normal temperature and allow a non-aqueous secondary battery to exert excellent electrical characteristics.

It could be further helpful to provide a method of producing a laminate for non-aqueous secondary battery, which can allow a non-aqueous secondary battery to exert excellent electrical characteristics.

(Solution to Problem)

The inventors conducted diligent investigation with the aim of solving the problems set forth above. The inventors discovered that, in a composition for non-aqueous secondary battery adhesive layer, which contains a particulate polymer having a core-shell structure, if an alkylene oxide group-containing monomer unit is included in a polymer forming the shell portion in the core-shell structure, it is possible to strongly bond battery members to each other by pressurization at normal temperature while ensuring inkjet discharge characteristics, as well as to allow a non-aqueous secondary battery to exert excellent battery characteristics. In this manner, the inventors completed the present disclosure.

Specifically, the present disclosure aims to advantageously solve the problems set forth above, and thus compositions for non-aqueous secondary battery adhesive layer as described in followings (1) to (7), an adhesive layer for non-aqueous secondary battery as described in following (8), a method of producing an adhesive layer for non-aqueous secondary battery as described in following (9), a laminate for non-aqueous secondary battery as described in following (10), a method of producing a laminate for non-aqueous secondary battery as described in following (11), and a non-aqueous secondary battery as described in following (12) are provided.

(1) A composition for non-aqueous secondary battery adhesive layer comprising a particulate polymer, wherein the particulate polymer has a core-shell structure that includes a core portion and a shell portion partially covering an outer surface of the core portion, and the shell portion is formed of a polymer including an alkylene oxide group-containing monomer unit.
When the composition for non-aqueous secondary battery adhesive layer, which is formed such that the polymer forming the shell portion in the particulate polymer having a core-shell structure includes an alkylene oxide group-containing monomer unit, is used in this manner, it is possible to strongly bond battery members to each other by pressurization at normal temperature while ensuring inkjet discharge characteristics and allow a non-aqueous secondary battery to exert excellent battery characteristics.

(2) The composition for non-aqueous secondary battery adhesive layer according to (1) above, wherein the polymer forming the shell portion includes the alkylene oxide group-containing monomer unit in a proportion of 3 mass% or more and 60 mass% or less.
When the polymer forming the shell portion includes an alkylene oxide group-containing monomer unit in a predetermined content proportion in this manner, it is possible to further strongly bond battery members to each other by pressurization at normal temperature and increase an affinity to an electrolyte solution of the polymer forming the shell portion to improve the battery characteristics.

(3) The composition for non-aqueous secondary battery adhesive layer according to (1) or (2) above, wherein the polymer forming the shell portion includes an aromatic vinyl monomer unit in a proportion of 35 mass% or more and 96 mass% or less.
When the polymer forming the shell portion includes an aromatic vinyl monomer unit in a predetermined content proportion in this manner, it is possible to further strongly bond battery members to each other by pressurization at normal temperature.

(4) The composition for non-aqueous secondary battery adhesive layer according to any one of (1) to (3) above, wherein the core portion is formed of a polymer including a (meth)acrylic acid ester monomer unit in a proportion of 50 mass% or more and 98 mass% or less.

When the core portion is formed of a polymer including a (meth)acrylic acid ester monomer unit in a proportion of 50 mass% or more and 98 mass% or less in this manner, it is possible to further strongly bond battery members to each other by pressurization at normal temperature.

(5) The composition for non-aqueous secondary battery adhesive layer according to any one of (1) to (4) above, wherein a polymer forming the core portion has a glass-transition temperature of -50°C or more and 25°C or less, and the polymer forming the shell portion has a glass-transition temperature of 50°C or more and 200°C or less.

When the glass-transition temperature of the polymer forming the core portion and the glass-transition temperature of the polymer forming the shell portion are within respective predetermined ranges in this manner, it is possible to further suppress the clogging of a nozzle when the inkjet method is employed to further improve the inkjet discharge characteristics, and it is also possible to further strongly bond battery members to each other by pressurization at normal temperature and allow a non-aqueous secondary battery to exert further excellent battery characteristics.

Note that the term "glass-transition temperature" as used in the present disclosure can be measured using a measurement method described in the EXAMPLES section of the present specification.

(6) The composition for non-aqueous secondary battery adhesive layer according to (5) above, wherein the polymer forming the core portion has a glass-transition temperature of -40°C or more and 25°C or less.

When the glass-transition temperature of the polymer forming the core portion is within the aforementioned predetermined range in this manner, it is possible to further strongly bond battery members to each other by pressurization at normal temperature.

(7) The composition for non-aqueous secondary battery adhesive layer according to any one of (1) to (6) above, wherein the particulate polymer has a volume-average particle diameter of 100 nm or more and 1500 nm or less.

When the volume-average particle diameter of the particulate polymer is 100 nm or more in this manner, it is possible to suppress the deterioration of battery characteristics by the resistance increase of a secondary battery due to the blocking of the passing route of lithium ions of a substrate (electrode or separator). When the volume-average particle diameter is 1500 nm or less, it is possible to further suppress the clogging of a nozzle when the composition for non-aqueous secondary battery adhesive layer is applied by the inkjet method to improve the inkjet discharge characteristics.

Note that the term "volume-average particle diameter" as used in the present disclosure refers to a particle diameter at which, in a particle size distribution (volume basis) measured by laser diffraction, cumulative volume calculated from the small diameter end of the distribution reaches 50% and can be measured using a measurement method described in the EXAMPLES section of the present specification.

(8) An adhesive layer for non-aqueous secondary battery being formed using the composition for non-aqueous secondary battery adhesive layer according to any one of (1) to (7) above.

The adhesive layer for non-aqueous secondary battery formed using the composition for non-aqueous secondary battery adhesive layer according to any one of (1) to (7) above makes it possible to more strongly bond battery members such as a separator and an electrode to each other by pressurization at normal temperature and allow a non-aqueous secondary battery to exert excellent battery characteristics.

(9) A method of producing an adhesive layer for non-aqueous secondary battery, the method comprising:

applying the composition for non-aqueous secondary battery adhesive layer according to any one of (1) to (7) above onto a substrate by an inkjet method; and

drying the composition for non-aqueous secondary battery adhesive layer applied onto the substrate.

When the composition for non-aqueous secondary battery adhesive layer according to any one of (1) to (7) above is used, even when the inkjet method is employed, it is possible to ensure the inkjet discharge characteristics by suppressing generation of the clogging of a nozzle, thus making it possible to well form an adhesive layer for non-aqueous secondary battery on the substrate.

(10) A laminate for non-aqueous secondary battery comprising an electrode and a separator, wherein the electrode and the separator are bonded to each other via the adhesive layer for non-aqueous secondary battery according to (8) above.

In the laminate for non-aqueous secondary battery comprising the battery members bonded to each other using the adhesive layer for non-aqueous secondary battery according to (8) above, the battery members are strongly bonded to each other, making it possible to allow a non-aqueous secondary battery comprising the laminate for non-aqueous secondary battery to exert excellent battery characteristics.

(11) A method of producing a laminate for non-aqueous secondary battery, the method comprising:

supplying an adhesive material to at least one affixing surface of an electrode and a separator; and

affixing the electrode and the separator by pressurization at normal temperature via the affixing surface to which

the adhesive material has been supplied, wherein
the adhesive material is formed using the composition for non-aqueous secondary battery adhesive layer according to any one of (1) to (7) above.

When the adhesive material formed of the composition for non-aqueous secondary battery adhesive layer according to any one of (1) to (7) above is used, it is possible to strongly bond electrodes to each other at normal temperature.

Note that the term "normal temperature" as used in the present disclosure refers to a temperature in a range of 25°C± 5°C.

(12) A non-aqueous secondary battery comprising the laminate for non-aqueous secondary battery according to (10) above.

The non-aqueous secondary battery comprising the laminate for non-aqueous secondary battery according to (10) above can exert excellent battery characteristics.

(Advantageous Effect)

According to the present disclosure, it is possible to provide an adhesive layer for non-aqueous secondary battery, which can strongly bond battery members to each other by pressurization at normal temperature while ensuring inkjet discharge characteristics and to provide a composition for non-aqueous secondary battery adhesive layer, which can allow a non-aqueous secondary battery to exert excellent battery characteristics.

According to the present disclosure, it is also possible to provide an adhesive layer for non-aqueous secondary battery, which can strongly bond battery members to each other by pressurization at normal temperature and allow a non-aqueous secondary battery to exert excellent electrical characteristics.

According to the present disclosure, it is also possible to provide a laminate for non-aqueous secondary battery, which can allow a non-aqueous secondary battery to exert excellent electrical characteristics.

According to the present disclosure, it is also possible to provide a non-aqueous secondary battery with excellent electrical characteristics.

According to the present disclosure, it is also possible to provide a method of producing an adhesive layer for non-aqueous secondary battery, which can strongly bond battery members to each other by pressurization at normal temperature and allow a non-aqueous secondary battery to exert excellent electrical characteristics.

According to the present disclosure, it is further possible to provide a method of producing a laminate for non-aqueous secondary battery, which can allow a non-aqueous secondary battery to exert excellent electrical characteristics.

BRIEF DESCRIPTION OF THE DRAWINGS

In the accompanying drawings:

FIG. 1 is a cross-sectional view schematically illustrating one exemplary structure of a particulate polymer;
FIG. 2 is a drawing illustrating one exemplary production process of a laminate for non-aqueous secondary battery of the present disclosure; and
FIG. 3 is a drawing illustrating a production process of a laminate for non-aqueous secondary battery in Examples and Comparative Examples.

DETAILED DESCRIPTION

The following provides a detailed description of embodiments of the present disclosure.

A composition for non-aqueous secondary battery adhesive layer of the present disclosure can be used when an adhesive layer for non-aqueous secondary battery of the present disclosure is formed. The adhesive layer for non-aqueous secondary battery of the present disclosure can be produced by, for example, a method of producing an adhesive layer for non-aqueous secondary battery of the present disclosure. The adhesive layer for non-aqueous secondary battery of the present disclosure can be used when a laminate for non-aqueous secondary battery of the present disclosure and a non-aqueous secondary battery of the present disclosure are produced. The laminate for non-aqueous secondary battery of the present disclosure can be used when the non-aqueous secondary battery of the present disclosure is produced, and can be produced by, for example, a method of producing a laminate for non-aqueous secondary battery of the present disclosure. The non-aqueous secondary battery of the present disclosure includes the laminate for non-aqueous secondary battery of the present disclosure.

(Composition for non-aqueous secondary battery adhesive layer)

The composition for non-aqueous secondary battery adhesive layer of the present disclosure contains a particulate polymer having a core-shell structure and optionally further contains a particulate polymer not having a core-shell structure, and other components. The composition for non-aqueous secondary battery adhesive layer of the present disclosure is normally a slurry composition using water or the like as a solvent (dispersion medium). In the particulate polymer having a core-shell structure, which is contained in the composition for non-aqueous secondary battery adhesive layer of the present disclosure, the shell portion is formed of a polymer that includes an alkylene oxide group-containing monomer unit.

The composition for non-aqueous secondary battery adhesive layer of the present disclosure is formed by including the particulate polymer having a core-shell structure that has the aforementioned determined shell portion, making it possible to strongly bond battery members to each other by pressurization at normal temperature while ensuring inkjet discharge characteristics and allow a non-aqueous secondary battery to exert excellent battery characteristics.

<Particulate polymer having core-shell structure>

The particulate polymer having a core-shell structure, which is contained in the composition for non-aqueous secondary battery adhesive layer of the present disclosure, is a component that functions as a binder in an adhesive layer (adhesive material) that bonds battery members such as a separator and an electrode to each other.

<<Structure of particulate polymer having core-shell structure>>

The particulate polymer contained in the composition for non-aqueous secondary battery adhesive layer of the present disclosure has a core-shell structure that includes a core portion and a shell portion covering an outer surface of the core portion.

The shell portion may entirely cover the outer surface of the core portion or may partially cover the outer surface of the core portion. In terms of external appearance, even in a situation in which the outer surface of the core portion appears to be completely covered by the shell portion, the shell portion is still considered to be a shell portion that partially covers the outer surface of the core portion so long as pores are formed that pass between inside and outside of the shell portion.

FIG. 1 illustrates one exemplary cross-sectional structure of the particulate polymer. In FIG. 1, a particulate polymer 300 has a core-shell structure including a core portion 310 and a shell portion 320. The core portion 310 is a part inside the shell portion 320 in the particulate polymer 300. The shell portion 320 is a part that covers an outer surface 310S of the core portion 310 and is normally the outermost part in the particulate polymer 300. In the example of FIG. 1, the shell portion 320 partially covers the outer surface 310S of the core portion 310 without entirely covering the outer surface 310S of the core portion 310.

Note that the particulate polymer may include any constituent elements other than the core portion and the shell portion described above so long as the expected effects are not significantly lost as a result. Specifically, the particulate polymer may, for example, include a portion inside of the core portion, which is formed of a different polymer from the core portion. In one specific example, a residual seed particle may be present inside of the core portion in a situation in which seed particles are used in production of the particulate polymer by seeded polymerization. However, from a viewpoint of more noticeably displaying the expected effects, it is preferable that the particulate polymer is composed of only the core portion and the shell portion.

[Core portion]

-Composition-

Examples of monomers used for preparation of a polymer of the core portion include a vinyl chloride monomer such as vinyl chloride and vinylidene chloride; a vinyl acetate monomer such as vinyl acetate; an aromatic vinyl monomer such as styrene, α-methyl styrene, styrene sulfonic acid, butoxystyrene, and vinylnaphthalene; a vinylamine monomer such as vinylamine; a vinylamide monomer such as N-vinylformamide and N-vinylacetamide; a non-fluorine-containing (meth)acrylic acid ester monomer such as methyl acrylate, ethyl acrylate, butyl acrylate, 2-ethylhexyl acrylate, methyl methacrylate, ethyl methacrylate, butyl methacrylate, and cyclohexyl methacrylate; a (meth)acrylamide monomer such as acrylamide and methacrylamide; a (meth)acrylonitrile monomer such as acrylonitrile and methacrylonitrile; a fluorine-containing (meth)acrylic acid ester monomer such as 2-(perfluorohexyl)ethyl methacrylate and 2-(perfluorobutyl)ethyl acrylate; maleimide; and a maleimide derivative such as phenylmaleimide. One of these monomers may be used individually, or two or more of these monomers may be used in combination in a freely selected ratio.

Note that in the present disclosure, "(meth)acryl" is used to indicate "acryl" and/or "methacryl", and "(meth)acrylonitrile" is used to indicate "acrylonitrile" and/or "methacrylonitrile".

Of these monomers, as a monomer used for preparation of a polymer of the core portion, from the perspective of providing further strong bonding between battery members via an adhesive layer, it is preferable to use at least a (meth)acrylic acid ester monomer, combined use of a (meth)acrylic acid ester monomer and an aromatic vinyl monomer or combined use of a (meth)acrylic acid ester monomer and a (meth)acrylonitrile monomer is more preferable, and the combined use of a (meth)acrylic acid ester monomer and an aromatic vinyl monomer is particularly preferable. That is, the polymer of the core portion preferably includes at least a (meth)acrylic acid ester monomer unit, more preferably includes a (meth)acrylic acid ester monomer unit, as well as an aromatic vinyl monomer unit or a (meth)acrylonitrile monomer unit, and further preferably includes a (meth)acrylic acid ester monomer unit and an aromatic vinyl monomer unit.

Note that the phrase "includes a monomer unit" as used in the present disclosure means that "a polymer obtained using the monomer includes a repeating unit derived from the monomer".

Moreover, the term "(meth)acrylic acid ester monomer" as used in the present disclosure refers to a monofunctional (meth)acrylic acid ester monomer having only one polymerizable reactive group.

The proportion of the (meth)acrylic acid ester monomer unit in the polymer of the core portion is preferably 50 mass% or more, more preferably 60 mass% or more, and particularly preferably 65 mass% or more, and preferably 98 mass% or less, more preferably 96 mass% or less, further preferably 85 mass% or less, and particularly preferably 80 mass% or less, when all repeating units (all monomer units) included in the polymer of the core portion is taken to be 100 mass%, from the perspective of providing further strong bonding between battery members via an adhesive material.

Moreover, when the polymer of the core portion includes a (meth)acrylic acid ester monomer unit and an aromatic vinyl monomer unit, the proportion of the aromatic vinyl monomer unit in the polymer of the core portion is preferably 15 mass% or more, more preferably 20 mass% or more, and particularly preferably 25 mass% or more, and preferably 50 mass% or less, more preferably 40 mass% or less, and particularly preferably 30 mass% or less, when all repeating units (all monomer units) included in the polymer of the core portion is taken to be 100 mass%, from the perspective of providing further strong bonding between battery members via an adhesive material.

Furthermore, when the polymer of the core portion includes a (meth)acrylic acid ester monomer unit and a (meth)acrylonitrile monomer unit, the proportion of the (meth)acrylonitrile monomer unit in the polymer of the core portion is preferably 5 mass% or more, and more preferably 10 mass% or more, and preferably 30 mass% or less, and more preferably 25 mass% or less, when all repeating units (all monomer units) included in the polymer of the core portion is taken to be 100 mass%, from the perspective of providing further strong bonding between battery members via an adhesive material.

The polymer of the core portion may include an acid group-containing monomer unit. Examples of acid group-containing monomers include monomers having an acid group, such as carboxy group-containing monomers, sulfo group-containing monomers, and phosphate group-containing monomers.

Moreover, examples of carboxy group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methyl vinyl sulfonic acid, (meth)allyl sulfonic acid, (meth)acrylic acid-2-sulfoethyl, 2-acrylamido-2-methylpropane sulfonic acid, and 3-allyloxy-2-hydroxypropane sulfonic acid.

Examples of phosphate group-containing monomers include 2-(meth)acryloyloxy ethyl phosphate, methyl-2-(meth)acryloyloxy ethyl phosphate, and ethyl-(meth)acryloyloxyethyl phosphate.

Note that in the present disclosure, "(meth)allyl" is used to indicate "allyl" and/or "methallyl", and "(meth)acryloyl" is used to indicate "acryloyl" and/or "methacryloyl".

Of these acid group-containing monomers, carboxy group-containing monomers are preferable, of which, monocarboxylic acids are preferable, and (meth)acrylic acid is more preferable.

One of these acid group-containing monomers may be used individually, or two or more of these acid group-containing monomers may be used in combination in a freely selected ratio.

The proportion of the acid group-containing monomer unit in the polymer of the core portion is preferably 0.1 mass% or more, and more preferably 1 mass% or more, and preferably 15 mass% or less, and more preferably 10 mass% or less, when all repeating units (all monomer units) included in the polymer of the core portion is taken to be 100 mass%. By setting the proportion of the acid group-containing monomer unit within any of the ranges set forth above, it is possible to increase dispersibility of the polymer of the core portion and facilitate formation of a shell portion partially covering the outer surface of the core portion on the outer surface of the polymer of the core portion, during preparation of the particulate polymer.

Moreover, the polymer of the core portion preferably includes a cross-linkable monomer unit in addition to the monomer units described above. A cross-linkable monomer is a monomer that can form a cross-linked structure during

or after polymerization by heating or by irradiation with energy rays.

Examples of cross-linkable monomers include polyfunctional monomers having two or more polymerizable reactive groups in the monomer. Examples of polyfunctional monomers include a divinyl monomer such as divinyl benzene, 1,3-butadiene, isoprene, and allyl methacrylate; a di(meth)acrylic acid ester monomer such as ethylene dimethacrylate, diethylene glycol dimethacrylate, ethylene glycol dimethacrylate, diethylene glycol diacrylate, and 1,3-butylene glycol diacrylate; a tri(meth)acrylic acid ester monomer such as trimethylolpropane trimethacrylate and trimethylolpropane triacrylate; an epoxy group-containing ethylenically unsaturated monomer such as allyl glycidyl ether and glycidyl methacrylate; and γ-methacryloxypropyltrimethoxysilane. Of these polyfunctional monomers, a di(meth)acrylic acid ester monomer is more preferable. One of these polyfunctional monomers may be used individually, or two or more of these polyfunctional monomers may be used in combination in a freely selected ratio.

The proportion of the cross-linkable monomer unit in the polymer of the core portion is preferably 0.1 mass% or more, more preferably 0.2 mass% or more, and particularly preferably 0.4 mass% or more, and preferably 10 mass% or less, more preferably 5 mass% or less, and particularly preferably 3 mass% or less, when all repeating units (all monomer units) included in the polymer of the core portion is taken to be 100 mass%. By setting the proportion of the cross-linkable monomer unit within any of the ranges set forth above, it is possible to further strongly bond battery members to each other via an adhesive layer.

-Glass-transition temperature-

The glass-transition temperature of the polymer of the core portion in the particulate polymer is preferably -50°C or more, more preferably -45°C or more, and further preferably -40°C or more, and preferably 25°C or less, more preferably 10°C or less, and further preferably 0°C or less. With the glass-transition temperature of the polymer of the core portion being equal to or greater than the aforementioned lower limit, it is possible to improve the inkjet discharge characteristics. On the other hand, with the glass-transition temperature of the polymer of the core portion being equal to or lower than the aforementioned upper limit, it is possible to allow the polymer of the core portion to express good adhesiveness to further strongly bond battery members to each other via an adhesive layer even by pressurization at normal temperature.

The glass-transition temperature of the polymer of the core portion can be adjusted by, for example, changing the type or proportion of the monomer used for preparation of the polymer of the core portion.

[Shell portion]

-Composition-

A polymer forming the shell portion includes an alkylene oxide group-containing monomer unit and optionally may further include other monomer units.

The following describes the detail of a polymer used for the shell portion in the particulate polymer having a core-shell structure, which is contained in the composition for non-aqueous secondary battery adhesive layer of the present disclosure.

--Alkylene oxide group-containing monomer unit--

No particular limitations are placed on an alkylene oxide group-containing monomer that may form an alkylene oxide group-containing monomer unit included in the polymer used for the shell portion so long as it has an alkylene oxide group. The alkylene oxide group-containing monomer preferably has one polymerizable unsaturated bond, preferably has a chain alkylene oxide group, and more preferably has one polymerizable unsaturated bond and a chain alkylene oxide group.

The respective alkylene oxide groups that form an alkylene oxide chain in the alkylene oxide group-containing monomer unit may be expressed by any of -AO- and -OA- when an alkylene group is A.

The number of alkylene oxide groups is not particularly limited but is preferably 2 or more, more preferably 5 or more, and further preferably 9 or more, and preferably 30 or less, and more preferably 25 or less. When the number of alkylene oxide groups is within any of the ranges set forth above, it is possible to improve the mechanical stability of the particulate polymer.

Alkylene oxide groups having different carbon numbers may be mixed in the alkylene oxide chain. For example, in the alkylene oxide chain, alkylene oxide groups having different carbon numbers such as ethylene oxide groups, propylene oxide groups, and butylene oxide groups may be bonded at random or in block.

Examples of the alkylene oxide group-containing monomers that may form an alkylene oxide group-containing monomer unit include (poly)oxyalkylene alkenyl ether, and (poly)oxyalkylene (meth)acrylate having a (meth)acryloyl

group at the end.

The alkenyl group in (poly)oxyalkylene alkenyl ether as described above is not particularly limited but includes an alkenyl group having a carbon number of 2 to 10. Specific examples of the alkenyl group include a vinyl group, (ethenyl group, $-CH=CH_2$), an allyl group (2-propenyl group, $-CH_2-CH=CH_2$), a 1-propenyl group ($-CH=CH-CH_3$), an isopropenyl group ($-C(CH_3)=CH_2$), a 1-butenyl group ($-CH=CH-CH_2-CH_3$), a 2-butenyl group ($-CH_2-CH=CH-CH_3$), and a 3-butenyl group ($-CH_2-CH_2-CH=CH_2$).

The alkylene group in (poly)oxyalkylene alkenyl ether as described above is not particularly limited but includes linear or branched alkylene groups such as a methylene group, an ethylene group, a propylene group, and a butylene group.

The number of alkylene oxide groups (oxyalkylene groups) in (poly)oxyalkylene alkenyl ether as described above is not particularly limited but is preferably 2 or more, more preferably 5 or more, and further preferably 9 or more, and preferably 30 or less, and more preferably 25 or less. When the number of the alkylene oxide groups is within any of the ranges set forth above, it is possible to improve the mechanical stability of the particulate polymer.

Specific examples of (poly)oxyalkylene alkenyl ether as described above include (poly)oxyethylene vinyl ether, (poly)oxypropylene vinyl ether, (poly)oxyethylene allyl ether, (poly)oxypropylene allyl ether, (poly)oxyethylene butenyl ether, (poly)oxypropylene butenyl ether, (poly)oxyethylene pentenyl ether, and (poly)oxypropylene pentenyl ether.

(Poly)oxyalkylene (meth)acrylate having a (meth)acryloyl group at the end as described above is not particularly limited but is preferably (poly)oxyalkylene (meth)acrylate represented by formula (I) below, in terms of copolymerizability.

[Chemical 1]

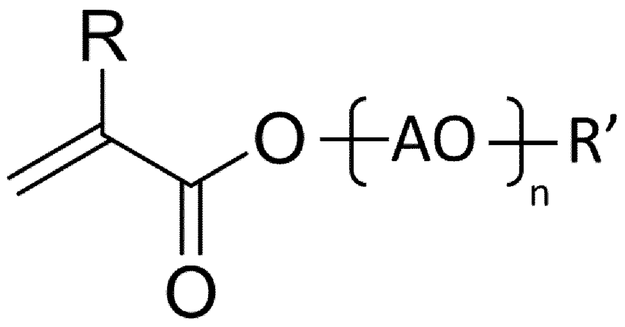

... (I)

(in formula (I), A represents an alkylene group that may have a substituent, R represents a hydrogen atom or a methyl group, R' represents a hydrogen atom, an alkyl group that may have a substituent, or a phenyl group, n is a positive integer, and the carbon number of A may be different for each repeating unit of an alkylene oxide group (-AO-))

In formula (I) above, examples of the alkylene group of A includes, but are not particularly limited to, a linear or branched alkylene group such as an ethylene group, a propylene group, and a butylene group. Of these alkylene groups, the alkylene group of A is preferably an ethylene group or a propylene group and particularly preferably an ethylene group.

Examples of possible substituents of the alkylene group of A include, but are not particularly limited to, substituents other than an alkyl group, specifically, a hydroxyl group; a cyano group; an amino group; a substituted amino group such as a dimethylamino group; an alkoxy group having a carbon number of 1 to 10 such as a methoxy group, an ethoxy group, and a propoxy group; a nitro group; a cycloalkyl group having a carbon number of 3 to 10 such as a cyclopropyl group and a cyclohexyl group; and an aryl group such as a phenyl group and a naphthyl group.

In formula (I) above, A includes, but is not particularly limited to, a linear or branched alkylene group such as an ethylene group, a propylene group, and a butylene group, which may have the substituent as described above. A in formula (I) above is preferably an ethylene group, a propylene group, or a butylene group, more preferably an ethylene group or a propylene group, and particularly preferably an ethylene group.

In formula (I) above, examples of the alkyl group of R' include, but are not particularly limited to, alkyl groups having a carbon number of 1 to 10 such as a methyl group, an ethyl group, an n-propyl group, an isopropyl group, an n-butyl group, an isobutyl group, a 1-methylpentyl group, a 1-ethylpentyl group, a sec-butyl group, a t-butyl group, an n-pentyl group, an isopentyl group, a neopentyl group, an n-hexyl group, a 2-ethylhexyl group, an isohexyl group, an n-heptyl group, an n-octyl group, an n-nonyl group, and an n-decyl group. Of these alkyl groups, a methyl group, an ethyl group, an n-propyl group, and an isopropyl group are preferable, a methyl group and an n-propyl group are more preferable, and a methyl group is particularly preferable.

Possible substituents of the alkyl group of R' include, but are not particularly limited to, the same substituents as the possible substituents of the alkylene group of A.

R' in formula (I) above includes, but is not particularly limited to, a hydrogen atom, an alkyl group having a carbon number of 1 to 10 that may have the substituent as described above, and a phenyl group. R' in formula (I) above is preferably a hydrogen atom, a methyl group, or an ethyl group, more preferably a hydrogen atom or a methyl group, and particularly preferably a methyl group.

In formula (I) above, n is not particularly limited but is preferably 2 or more, more preferably 5 or more, and further preferably 9 or more, and preferably 30 or less, and more preferably 25 or less. When n is within any of the ranges set forth above, it is possible to improve the mechanical stability of the particulate polymer.

(Poly)oxyalkylene (meth)acrylate represented by formula (I) above may have an alkylene oxide chain formed such that alkylene oxide groups such as ethylene oxide groups, propylene oxide groups, and butylene oxide groups are bonded at random or in block.

Specific examples of (poly)oxyalkylene (meth)acrylate represented by formula (I) above include polyalkylene glycol (meth)acrylate having a polyethylene oxide chain, polyalkylene glycol (meth)acrylate having a polypropylene oxide chain, polyalkylene glycol (meth)acrylate having a polybutylene oxide chain, and polyalkylene glycol (meth)acrylate having both of a polyethylene oxide chain and a polypropylene oxide chain.

Examples of polyalkylene glycol (meth)acrylate having a polyethylene oxide chain include methoxy polyethylene glycol (meth)acrylate, ethoxy polyethylene glycol (meth)acrylate, and polyethylene glycol (meth)acrylate.

Examples of polyalkylene glycol (meth)acrylate having a polypropylene oxide chain include methoxy polypropylene glycol (meth)acrylate, ethoxy polypropylene glycol (meth)acrylate, and polypropylene glycol (meth)acrylate.

Examples of polyalkylene glycol (meth)acrylate having a polybutylene oxide chain include methoxy polybutylene glycol (meth)acrylate, ethoxy polybutylene glycol (meth)acrylate, and polybutylene glycol (meth)acrylate.

Examples of polyalkylene glycol (meth)acrylate having both of a polyethylene oxide chain and a polypropylene oxide chain include polyethylene glycol polypropylene glycol (meth)acrylate.

The aforementioned compounds can be synthesized by various publicly known methods because they are ester compounds formed of (meth)acrylic acid and polyoxyalkylene ether, but in terms of availability, commercially available compounds are preferably used.

Examples of commercially available (poly)oxyalkylene (meth)acrylate include, but are not limited to: NK Ester AM30G (methoxy polyethylene glycol acrylate; number of replications of alkylene oxide group: $n \approx 3$), NK Ester M40G (methoxy polyethylene glycol methacrylate; $n \approx 4$), NK Ester AM90G (methoxy polyethylene glycol acrylate; $n \approx 9$), NK Ester M90G (methoxy polyethylene glycol methacrylate; $n \approx 9$), NK Ester AM130G (methoxy polyethylene glycol acrylate; $n \approx 13$), NK Ester AM230G (methoxy polyethylene glycol acrylate; $n \approx 23$) (all produced by SHIN-NAKAMURA CHEMICAL Co., Ltd.);

BLEMMER E (hydroxyethyl methacrylate; n = 1), BLEMMER PE-90 (polyethylene glycol monomethacrylate; $n \approx 2$), BLEMMER PE-200 (polyethylene glycol monomethacrylate; $n \approx 4.5$), BLEMMER PE-350 (polyethylene glycol monomethacrylate; $n \approx 8$), BLEMMER P (hydroxypropyl methacrylate; n = 1), BLEMMER PP-1000 (polypropylene glycol monomethacrylate; $n \approx 4$ to 6), BLEMMER PP-500 (polypropylene glycol monomethacrylate; $n \approx 9$), BLEMMER 50 PEP-300 (polyethylene glycol polypropylene glycol monomethacrylate; EO $\approx$ 3.5; PO $\approx$ 2.5; random), BLEMMER 55 PET-800 (polyethylene glycol polybutylene glycol monomethacrylate; EO $\approx$ 10; BO $\approx$ 5; random), BLEMMER AE-200 (polyethylene glycol monoacrylate; $n \approx 4.5$), BLEMMER AE-400 (polyethylene glycol monoacrylate; $n \approx 10$), and BLEMMER AP-400 (polypropylene glycol monomethacrylate; $n \approx 6$) (all produced by NOF CORPORATION); and

Light Acrylate EC-A (ethoxy diethylene glycol acrylate; n = 2), Light Acrylate MTG-A (methoxy triethylene glycol acrylate; n = 3), Light Acrylate EHDG-AT (2-ethylhexyl diglycol acrylate; n = 2), Light Acrylate 130-A (methoxy polyethylene glycol acrylate; $n \approx 9$), Light Acrylate P2H-A (phenoxydiethylene glycol acrylate; n = 2), and Light Ester 130-MA (methoxy polyethylene glycol methacrylate; $n \approx 9$) (all produced by Kyoeisha Chemical Co., Ltd.).

One of these alkylene oxide group-containing monomers as described above may be used individually, or two or more of these alkylene oxide group-containing monomers may be used in combination.

Note that the term "alkylene oxide group-containing monomer" as used in the present disclosure is not included in a (meth)acrylic acid ester monomer, a (meth)acrylonitrile monomer, an aromatic vinyl monomer, and a cross-linkable monomer, which are described below as other monomers.

The proportion of the alkylene oxide group-containing monomer unit in the polymer of the shell portion is preferably 3 mass% or more, more preferably 5 mass% or more, and further preferably 16 mass% or more, and preferably 60 mass% or less, and more preferably 50 mass% or less, when all repeating units (all monomer units) included in the polymer of the shell portion is taken to be 100 mass%. With the content proportion of the alkylene oxide group-containing monomer unit being equal to or greater than the aforementioned lower limit, it is possible to further strongly bond battery members to each other by pressurization at normal temperature and to increase an affinity to an electrolyte solution of the polymer forming the shell portion to improve the battery characteristics. With the proportion of the alkylene oxide group-containing monomer unit being equal to or lower than the aforementioned upper limit, it is possible to suppress the elution of the polymer forming the shell portion into the electrolyte solution.

--Other monomer units--

Examples of monomers that can form the other monomer units that may be optionally included in the polymer forming the shell portion include monomers similar to those exemplified above as monomers which may be used for production of the polymer of the core portion (e.g., a (meth)acrylic acid ester monomer unit, a (meth)acrylonitrile monomer, an aromatic vinyl monomer, and a cross-linkable monomer). One of these monomers may be used individually, or two or more of these monomers may be used in combination in a freely selected ratio.

Of these monomers, from the perspective of providing further strong bonding between battery members via an adhesive layer, it is preferable to use at least one of a (meth)acrylic acid ester monomer and an aromatic vinyl monomer, as a monomer used for preparation of the polymer of the shell portion. That is, the polymer of the shell portion preferably includes at least one of a (meth)acrylic acid ester monomer unit and an aromatic vinyl monomer unit and more preferably includes an aromatic vinyl monomer unit.

The proportion of the (meth)acrylic acid ester monomer unit in the polymer of the shell portion is preferably 1 mass% or more, more preferably 5 mass% or more, and further preferably 10 mass% or more, and preferably 30 mass% or less, and more preferably 20 mass% or less, when all repeating units (all monomer units) included in the polymer of the shell portion is taken to be 100 mass%, from the perspective of providing even further strong bonding between battery members via an adhesive layer.

The proportion of the aromatic vinyl monomer unit in the polymer of the shell portion is preferably 35 mass% or more, and more preferably 45 mass% or more, and preferably 96 mass% or less, and more preferably 93 mass% or less, when all repeating units (all monomer units) included in the polymer of the shell portion is taken to be 100 mass%, from the perspective of providing even further strong bonding between battery members via an adhesive layer.

The polymer of the shell portion may include an acid group-containing monomer unit, in addition to a (meth)acrylic acid ester monomer unit and an aromatic vinyl monomer unit. Examples of acid group-containing monomers include monomers having an acid group, such as carboxy group-containing monomers, sulfo group-containing monomers, and phosphate group-containing monomers. Specifically, the acid group-containing monomer includes monomers similar to the acid group-containing monomers that may be used for formation of the core portion.

Of these acid group-containing monomers, carboxy group-containing monomers are preferable, of which, monocarboxylic acids are more preferable, and (meth)acrylic acid is further preferable.

One of these acid group-containing monomers may be used individually, or two or more of these acid group-containing monomers may be used in combination in a freely selected ratio.

The proportion of the acid group-containing monomer unit in the polymer of the shell portion is preferably 0.1 mass% or more, more preferably 0.4 mass% or more, and further preferably 0.7 mass% or more, and preferably 15 mass% or less, more preferably 10 mass% or less, and further preferably 5 mass% or less, when all repeating units (all monomer units) included in the polymer of the shell portion is taken to be 100 mass%. By setting the proportion of the acid group-containing monomer unit within any of the ranges set forth above, it is possible to improve the dispersibility of the particulate polymer to even further strongly bond battery members to each other via an adhesive layer.

The polymer of the shell portion may also include a cross-linkable monomer unit. Examples of cross-linkable monomers include monomers similar to those exemplified above as cross-linkable monomers which may be used for the polymer of the core portion. Of these cross-linkable monomers, a di(meth)acrylic acid ester monomer and allyl methacrylate are preferable. One of these cross-linkable monomers may be used individually, or two or more of these cross-linkable monomers may be used in combination in a freely selected ratio.

The proportion of the cross-linkable monomer unit in the polymer of the shell portion is preferably 0.05 mass% or more, more preferably 0.1 mass% or more, and further preferably 0.2 mass% or more, and preferably 4 mass% or less, more preferably 3 mass% or less, and further preferably 2 mass% or less, when all repeating units (all monomer units) included in the polymer of the shell portion is taken to be 100 mass%.

-Glass-transition temperature-

The glass-transition temperature of the polymer of the shell portion in the particulate polymer having a core-shell structure is preferably 50°C or more, more preferably 55°C or more, further preferably 60°C or more, and even further preferably 95°C or more, and preferably 200°C or less, and more preferably 120°C or less. With the glass-transition temperature of the polymer of the shell portion being equal to or greater than the aforementioned lower limit, it is possible to further improve the inkjet discharge characteristics. On the other hand, with the glass-transition temperature of the polymer of the shell portion being equal to or lower than the aforementioned upper limit, it is possible to further strongly bond battery members to each other at normal temperature via an adhesive layer because the particulate polymer is moderately soft.

The glass-transition temperature of the polymer of the shell portion can be adjusted by, for example, changing the type or proportion of the monomer used for preparation of the polymer of the shell portion.

The glass-transition temperature of the polymer of the shell portion is preferably at least 25°C higher and more preferably at least 50°C higher than aforementioned glass-transition temperature of the polymer of the core portion, from the perspective of holding the shape of the particulate polymer after the bonding between battery members to suppress an increase in resistance.

[Mass proportion of shell portion among total of core portion and shell portion]

In the particulate polymer having a core-shell structure, the mass proportion of the shell portion among the total of the core portion and the shell portion is preferably 2 mass% or more, and more preferably 5 mass% or more, and preferably 15 mass% or less, and more preferably 10 mass% or less. With the mass proportion of the shell portion being equal to or greater than the aforementioned lower limit, it is possible to further improve the inkjet discharge characteristics. With the mass proportion of the shell portion being equal to or lower than the aforementioned upper limit, it is possible to further strongly bond battery members to each other during pressurization at normal temperature and allow the secondary battery to exert further excellent battery characteristics.

The mass proportion of the shell portion among the total of the core portion and the shell portion is determined by the ratio of thickness of the core portion and the shell portion, which is described below, and the specific gravity of the particulate polymer.

[Volume-average particle diameter of particulate polymer having core-shell structure]

The volume-average particle diameter of the particulate polymer having a core-shell structure is preferably 100 nm or more, and more preferably 200 nm or more, and preferably 1500 nm or less, more preferably 900 nm or less, further preferably 800 nm or less, and even further preferably 700 nm or less. When the volume-average particle diameter of the particulate polymer having a core-shell structure is 100 nm or more, it is possible to suppress the deterioration of battery characteristics by the resistance increase of a secondary battery due to the blocking of the passing route of lithium ions of a substrate (electrode or separator). When the volume-average particle diameter is 1500 nm or less, it is possible to further suppress the clogging of a nozzle when the composition for non-aqueous secondary battery adhesive layer is applied by the inkjet method to improve the inkjet discharge characteristics.

[Ratio of average thickness of shell portion to volume-average particle diameter]

The ratio of the average thickness of the shell portion to the volume-average particle diameter of the particulate polymer having a core-shell structure is preferably 0.1% or more, and more preferably 0.5% or more, and preferably 15% or less, and more preferably 10% or less. With the average thickness of the shell portion being equal to or greater than the aforementioned lower limit, it is possible to further improve the inkjet discharge characteristics. With the average thickness of the shell portion being equal to or lower than the aforementioned upper limit, it is possible to further strongly bond battery members to each other when the battery members are pressurized at normal temperature.

The average thickness of the shell portion in the particulate polymer having a core-shell structure is determined by observing a cross-sectional structure of the particulate polymer having a core-shell structure, using a transmission electron microscope (TEM). Specifically, the maximum thickness of the shell portion in the cross-sectional structure of the particulate polymer is measured using the TEM. 20 or more randomly-selected particles of the particulate polymer are measured for their maximum thickness of the shell portion, and an average of the measured maximum thicknesses is recorded as an average thickness of the shell portion. However, in the case that the shell portion is formed of polymer particles and these polymer particles are arranged in a monolayer without being stacked on top of each other in the radial direction of the particles of the particulate polymer, the number average particle diameter of the particles forming the shell portion is recorded as an average thickness of the shell portion.

[Method of preparing particulate polymer having core-shell structure]

The particulate polymer having a core-shell structure set forth above can be prepared by, for example, performing stepwise polymerization using the monomer for the polymer of the core portion and the monomer for the polymer of the shell portion and changing the ratio of these monomers over time. Specifically, the particulate polymer can be prepared by continuous, multi-step emulsion polymerization or multi-step suspension polymerization in which a polymer of a preceding step is then covered by a polymer of a succeeding step.

The following describes one example of a case in which the particulate polymer having a core-shell structure set forth above is obtained by multi-step emulsion polymerization.

In the polymerization, an anionic surfactant such as sodium dodecylbenzenesulfonate or sodium dodecyl sulfate, a nonionic surfactant such as polyoxyethylene nonylphenyl ether or sorbitan monolaurate, or a cationic surfactant such

as octadecylamine acetate can be used as an emulsifier in accordance with a standard method. Moreover, a peroxide such as t-butyl peroxy-2-ethylhexanoate, potassium persulfate, or cumene peroxide, or an azo compound such as 2,2'-azobis(2-methyl-N-(2-hydroxyethyl)-propionamide) or 2,2'-azobis(2-amidinopropane) hydrochloride can be used as a polymerization initiator, for example.

The polymerization procedure involves initially mixing monomers for forming the core portion and the emulsifier, and performing emulsion polymerization as one batch to obtain a particulate polymer that forms the core portion. The particulate polymer having a core-shell structure set forth above can then be obtained by performing polymerization of monomers for forming the shell portion in the presence of the particulate polymer forming the core portion.

In this polymerization, it is preferable that the monomers for forming the polymer of the shell portion are supplied into the polymerization system continuously or divided into a plurality of portions when preparing the particulate polymer that partially covers the outer surface of the core portion with the shell portion. As a result of the monomers for forming the polymer of the shell portion being supplied into the polymerization system in portions or continuously, the polymer forming the shell portion can be formed as particles that bond to the core portion such as to form a shell portion that partially covers the core portion.

<Particulate polymer not having core-shell structure>

<<Composition>>

Monomers used for preparation of the particulate polymer not having a core-shell structure, which is optionally contained in the composition for non-aqueous secondary battery adhesive layer of the present disclosure, include the same monomers as those exemplified above as monomers which may be used for production of the polymer of the core portion in the particulate polymer having a core-shell structure set forth above. Examples of the monomers used for preparation of the particulate polymer not having a core-shell structure is preferably a (meth)acrylic acid ester monomer, an aromatic vinyl monomer, an acid group-containing monomer, and a cross-linkable monomer. One of these monomers may be used individually, or two or more of these monomers may be used in combination in a freely selected ratio.

The proportion of the (meth)acrylic acid ester monomer unit in the particulate polymer not having a core-shell structure is preferably 40 mass% or more, more preferably 50 mass% or more, and further preferably 60 mass% or more, and preferably 85 mass% or less, more preferably 80 mass% or less, and further preferably 75 mass% or less, when all repeating units (all monomer units) included in the polymer is taken to be 100 mass%, from the perspective of providing further strong bonding between battery members via an adhesive layer.

The proportion of the aromatic vinyl monomer unit in the particulate polymer not having a core-shell structure is preferably 10 mass% or more, more preferably 15 mass% or more, and further preferably 20 mass% or more, and preferably 40 mass% or less, more preferably 35 mass% or less, and further preferably 30 mass% or less, when all repeating units (all monomer units) included in the polymer is taken to be 100 mass%, from the perspective of providing further strong bonding between battery members via an adhesive layer.

The proportion of the acid group-containing monomer unit in the particulate polymer not having a core-shell structure is preferably 0.5 mass% or more, more preferably 1 mass% or more, and further preferably 2 mass% or more, and preferably 10 mass% or less, more preferably 7 mass% or less, and further preferably 5 mass% or less, when all repeating units (all monomer units) included in the polymer is taken to be 100 mass%. By setting the proportion of the acid group-containing monomer unit in the particulate polymer not having a core-shell structure within any of the ranges set forth above, it is possible to increase the dispersibility of the particulate polymer.

The proportion of the cross-linkable monomer unit in the particulate polymer not having a core-shell structure is preferably 0.2 mass% or more, more preferably 0.5 mass% or more, and further preferably 1 mass% or more, and preferably 5 mass% or less, more preferably 4 mass% or less, and further preferably 3 mass% or less, when all repeating units (all monomer units) included in the polymer is taken to be 100 mass%, from the perspective of providing further strong bonding between battery members via an adhesive layer.

[Glass-transition temperature]

The glass-transition temperature of the particulate polymer not having a core-shell structure is preferably -40°C or more, more preferably -35°C or more, and further preferably -30°C or more, and preferably 0°C or less, more preferably -10°C or less, and further preferably -20°C or less. When the glass-transition temperature of the particulate polymer not having a core-shell structure is -40°C or more, it is possible to further strongly bond battery members to each other via an adhesive material. On the other hand, when the glass-transition temperature of the particulate polymer not having a core-shell structure is 0°C or less, it is possible to suppress dropping of the particulate polymer from the substrate.

[Volume-average particle diameter]

The volume-average particle diameter of the particulate polymer not having a core-shell structure is preferably 50 nm or more, more preferably 100 nm or more, and further preferably 200 nm or more, and preferably 600 nm or less, more preferably 500 nm or less, and further preferably 400 nm or less. When the volume-average particle diameter of the particulate polymer not having a core-shell structure is within any of the predetermined ranges set forth above, it is possible to further strongly bond battery members to each other via an adhesive material.

[Content]

The content of the particulate polymer not having a core-shell structure in the composition for adhesive layer can be adjusted as appropriate within the range in which desired effects of the present disclosure can be attained, but it is preferably 5 parts by mass or more, and more preferably 10 parts by mass or more, per 100 parts by mass of the particulate polymer having a core-shell structure. With the content of the particulate polymer not having a core-shell structure being equal to or greater than the aforementioned lower limit, it is possible to suppress dropping of the particulate polymer from the substrate.

[Production method]

The particulate polymer not having a core-shell structure can be prepared by performing polymerization of a monomer composition containing the monomers set forth above in an aqueous solvent such as water, for example, without any particular limitations. The proportion of each monomer in the monomer composition is normally the same as the proportion of each monomer unit in the particulate polymer not having a core-shell structure. The polymerization method and the polymerization reaction are not particularly limited, and publicly known polymerization method and polymerization reaction may be used.

«Degree of swelling in electrolyte solution»

The range of the degree of swelling in an electrolyte solution (liquid obtained by dissolving $LiPF_6$ at a concentration of 1 mol/L in a mixed solvent of ethylene carbonate/diethyl carbonate = 3/7 (volume ratio)) of the particulate polymer (hereinafter, also referred to simply as "degree of swelling") is not particularly specified. However, it is preferable that the particulate polymer does not dissolve in the electrolyte solution. When the particulate polymer dissolves in the electrolyte solution, the deterioration of the battery characteristics is a concern.

Note that the degree of swelling in the electrolyte solution of the particulate polymer set forth above can be measured using a method described in the EXAMPLES section of the present specification.

<Solvent>

Examples of the aforementioned solvent in which the particulate polymer is dispersed include, but are not limited to, water, an organic solvent, and a mixture thereof. Examples of the organic solvent include, but are not limited to, cyclic aliphatic hydrocarbons such as cyclopentane and cyclohexane; aromatic hydrocarbons such as toluene and xylene; ketones such as ethyl methyl ketone and cyclohexanone; esters such as ethyl acetate, butyl acetate, γ-butyrolactone, and ε-caprolactone; nitriles such as acetonitrile and propionitrile; ethers such as tetrahydrofuran and ethylene glycol diethyl ether; and alcohols such as methanol, ethanol, isopropanol, ethylene glycol, propylene glycol, and ethylene glycol monomethyl ether.

Of these organic solvents, from the perspective of simplified equipment, water is preferably used.

At least part of the aforementioned solvent may be removed by drying, for example, in a production step of the laminate for non-aqueous secondary battery.

<Other components>

Examples of other components that are optionally contained in the composition for non-aqueous secondary battery adhesive layer of the present disclosure include, but are not limited to, components such as a surface tension modifier, a dispersant that differs from the dispersant used for polymerization set forth above, a viscosity modifier, a reinforcing material, and an additive for electrolyte solution. Such optional components are not particularly limited as long as they do not affect the battery reaction, and components known in the art, such as those described in WO2012/115096, can be used. One of these components may be used individually, or two or more of these components may be used in combination in a freely selected ratio.

<Properties of composition for non-aqueous secondary battery adhesive layer>

In the composition for non-aqueous secondary battery adhesive layer of the present disclosure, the value of the pressure sensitivity of the adhesive force determined by formula (1) below is preferably more than 20 and less than 80.

$$\text{Pressure sensitivity of the adhesive force (N/(m}\bullet\text{MPa))} = (\text{T3} - \text{T1})/2 \quad \ldots (1)$$

(in the formula, T1 represents an adhesive force (N/m) between a polyethylene separator and an adhesive layer for non-aqueous secondary battery when the polyethylene separator and the adhesive layer for non-aqueous secondary battery obtained from the composition for non-aqueous secondary battery adhesive layer are bonded to each other by pressurization at 25°C and a pressure of 1 MPa for 10 seconds, and T3 represents an adhesive force (N/m) between a polyethylene separator and an adhesive layer for non-aqueous secondary battery when the polyethylene separator and the adhesive layer for non-aqueous secondary battery obtained from the composition for non-aqueous secondary battery adhesive layer are bonded to each other by pressurization at 25°C and a pressure of 3 MPa for 10 seconds).

The "pressure sensitivity of the adhesive force" determined in formula (1) above is a value obtained by dividing a difference (T3 - T1) between the adhesive force T3 (N/m) when a polyethylene separator and an adhesive layer for non-aqueous secondary battery formed using the composition for non-aqueous secondary battery adhesive layer are bonded to each other by pressurization at 25°C and a pressure of 3 MPa for 10 seconds and the adhesive force T1 (N/m) when a polyethylene separator and an adhesive layer for non-aqueous secondary battery obtained from the composition for non-aqueous secondary battery adhesive layer are bonded to each other by pressurization at 25°C and a pressure of 1 MPa for 10 seconds by a difference (3 - 1 (= 2)) between respective pressures (MPa) during the bonding by pressurization. That is, the pressure sensitivity of the adhesive force corresponds to the gradient between the pressure of 1 MPa and the pressure of 3 MPa in a graph with the pressure during the affixing on the horizontal axis and the adhesive force on the vertical axis and expresses a degree to which the adhesive force at the affixing by pressurization at a pressure of 3 MPa is greater than the adhesive force at the affixing by pressurization at a pressure of 1 MPa.

When the aforementioned value is more than 20, it is possible to further improve the inkjet discharge characteristics, and the adhesiveness between battery members when the battery members are affixed to each other by pressurization at normal temperature. When the aforementioned value is less than 80, it is possible to suppress deformation of the particulate polymer due to the effect of internal pressure caused by the swelling of the battery, suppress generation of the clogging of the separator, and further improve the battery characteristics of the secondary battery, during the durability evaluation of the secondary battery.

Note that the "adhesive layer for non-aqueous secondary battery" is a dried product of the composition for non-aqueous secondary battery adhesive layer.

In terms of balancing at higher levels the inkjet discharge characteristics, the adhesiveness between battery members when they are affixed to each other by pressurization at normal temperature, and the battery characteristics of the secondary battery, the pressure sensitivity of the adhesive force is preferably 30 or more, more preferably 40 or more, and further preferably 48 or more, and preferably 70 or less, and more preferably 60 or less.

The pressure sensitivity of the adhesive force can by controlled by, for example, changing the glass-transition temperature of the core portion in the particulate polymer having a core-shell structure, the glass-transition temperature of the shell portion, and/or the mass proportion of the shell portion among the total of the core portion and the shell portion in the particulate polymer having a core-shell structure.

Note that the pressure sensitivity of the adhesive force can be measured using a method described in the EXAMPLES section.

<Method of preparing composition for non-aqueous secondary battery adhesive layer>

The method of preparing a composition for non-aqueous secondary battery adhesive layer of the present disclosure is not particularly limited. For example, the composition for non-aqueous secondary battery adhesive layer of the present disclosure can be prepared by stirring and mixing the particulate polymer having a core-shell structure and optionally the particulate polymer not having a core-shell structure and/or other components in the presence of a solvent such as water. The stirring and mixing method is not particularly limited, and the stirring and mixing can be performed by a known method. Specifically, a common stirring vessel, ball mill, sand mill, bead mill, pigment disperser, ultrasonic disperser, grinding machine, homogenizer, planetary mixer, FILMIX, or the like can be used. The mixing conditions are not particularly limited, but the mixing can be normally performed for 10 minutes or more but a few hours or less at a temperature ranging from room temperature to 80°C.

(Adhesive layer for non-aqueous secondary battery)

The adhesive layer for non-aqueous secondary battery of the present disclosure can be obtained using the composition for non-aqueous secondary battery adhesive layer of the present disclosure. The adhesive layer for non-aqueous secondary battery of the present disclosure functions as an adhesive material that bonds battery members used for a non-aqueous secondary battery to each other. The adhesive layer for non-aqueous secondary battery of the present disclosure can be obtained by, for example, a method of producing an adhesive layer for non-aqueous secondary battery of the present disclosure, which is described below.

The adhesive layer for non-aqueous secondary battery of the present disclosure is a dried product formed by drying the composition for non-aqueous secondary battery adhesive layer of the present disclosure. Therefore, the adhesive layer for non-aqueous secondary battery of the present disclosure contains at least the aforementioned particulate polymer having a core-shell structure and optionally contains the aforementioned particulate polymer not having a core-shell structure and/or other components.

Although the particulate polymer is in a particulate form in the composition for non-aqueous secondary battery adhesive layer, the particulate polymer may be in a particulate form or in any other form in the adhesive layer for non-aqueous secondary battery.

The adhesive material can be formed such as to have any shape in plan-view, such as a striped shape, a dotted shape, or a lattice shape without any particular limitations. Of these examples, formation of the adhesive layer in a dotted shape is preferable from a viewpoint of reducing the resistance of the secondary battery. The dotted adhesive layer can be obtained by, for example, the inkjet method using coaters (51 to 54 in FIG. 2) described below.

The diameter of the dots of the adhesive layer arranged in a dotted pattern is preferably 10 μm or more, and more preferably 20 μm or more, and preferably 300 μm or less, and more preferably 200 μm or less. With the diameter of the dots of the adhesive layer being equal to or greater than the aforementioned lower limit, it is possible to increase the adhesive force between the electrode and the separator. On the other hand, with the diameter of the dots of the adhesive layer being equal to or lower than the aforementioned upper limit, it is possible to suppress the reduction in output characteristics of the secondary battery.

The thickness of the dots of the adhesive layer arranged in a dotted pattern is preferably 5 μm or more. With the thickness of the dots of the adhesive layer being equal to or greater than the aforementioned lower limit, it is possible to increase the adhesive force between the electrode and the separator.

The amount of the adhesive layer is preferably 0.02 $g/m^2$ or more, and preferably 1.0 $g/m^2$ or less, and more preferably 0.35 $g/m^2$ or less. With the amount of the adhesive layer being equal to or greater than the aforementioned lower limit, it is possible to sufficiently ensure the adhesive force between the electrode and the separator. With the amount of the adhesive layer being equal to or lower than the aforementioned upper limit, it is possible to keep the output characteristics of the secondary battery sufficiently high.

The ratio of coverage of the adhesive layer is preferably 1% or more, and more preferably 5% or more, and preferably 50% or less, and more preferably 30% or less. With the ratio of coverage of the adhesive layer being equal to or greater than the aforementioned lower limit, it is possible to ensure the adhesive force between the electrode and the separator. With the ratio of coverage of the adhesive layer being equal to or lower than the aforementioned upper limit, it is possible to keep the output characteristics of the secondary battery sufficiently high.

The "ratio of coverage of the adhesive layer" at a certain surface or region refers to a proportion of the area of a part covered with the adhesive layer among the total area of the surface or region [(area of part covered with adhesive layer/total area of surface or region) × 100 (%)].

Note that, when a composition for adhesive layer including the particulate polymer and a solvent is used, the "adhesive layer" in the "ratio of coverage of the adhesive layer" refers to a dried product of the composition for adhesive layer.

The ratio of coverage of the adhesive layer can be adjusted by changing the arrangement pattern of the adhesive layer disposed in (applied to) each region. Specifically, in a certain region, when the adhesive layer is disposed (applied) so as to be arranged in a dotted pattern, the ratio of coverage of the adhesive layer in the region can be adjusted by changing the radius and the center distance of the dots of the adhesive layer. For example, in a region where the adhesive layer is disposed (applied) in a dotted pattern formed of dots at regular intervals in each of two orthogonal directions, the ratio of coverage of the adhesive layer can be determined by formula (2) below using center distances (pitches) x and y of the dots and a radius r of the dots.

$$\text{Ratio of coverage of adhesive layer} = \{\pi r^2/(x \bullet y)\} \times 100\ (\%) \ \ldots\ (2)$$

(Method of producing adhesive layer for non-aqueous secondary battery)

The method of producing an adhesive layer for non-aqueous secondary battery of the present disclosure includes a step of applying the composition for non-aqueous secondary battery adhesive layer of the present disclosure onto the surface of a substrate by an inkjet method (applying step) and a step of drying the composition for non-aqueous secondary battery adhesive layer applied onto the substrate (drying step). The method of producing an adhesive layer for non-aqueous secondary battery of the present disclosure may also include a step of peeling the adhesive layer for non-aqueous secondary battery formed on the substrate (peeling step) after the drying step.

When the adhesive layer for non-aqueous secondary battery is formed on an electrode substrate or a separator substrate as a substrate, the electrode substrate and the separator substrate can be directly affixed to each other to form a laminate. When the adhesive layer for non-aqueous secondary battery is formed on a releasable substrate as a substrate, after the adhesive layer for non-aqueous secondary battery is peeled from the releasable substrate, the adhesive layer for non-aqueous secondary battery can be used for the bonding between the electrode substrate and the separator substrate.

<Applying step>

In the applying step, the droplets of the composition for non-aqueous secondary battery adhesive layer of the present disclosure are applied onto a substrate such as an electrode substrate, a separator substrate, and a releasable substrate through a nozzle of an ink-jet coater. A conventional publicly known ink-jet coater can be used, and, for example, the application can be performed using coaters (51 to 54 in FIG. 2) described below. From the perspective of production efficiency, the composition for non-aqueous secondary battery adhesive layer is preferably applied onto an electrode substrate or a separator substrate. From the perspective of facilitating the drying step, the composition for non-aqueous secondary battery adhesive layer is preferably applied onto an electrode substrate.

The application conditions by the inkjet method are not particularly limited so long as the composition for non-aqueous secondary battery adhesive layer can be applied onto the substrate. The application conditions can be adjusted as appropriate depending on the desired form (shape in plan-view, diameter of the dots, thickness of the dots, pitch of the dots, ratio of coverage, amount, etc.) of the resulting adhesive layer.

«Electrode substrate»

A known electrode substrate can be used as an electrode substrate without any particular limitations. Examples of the electrode substrate that can be used include an electrode formed of an electrode substrate made by forming an electrode mixed material layer on one surface or both surfaces of a current collector or an electrode made by further forming a porous membrane layer on the electrode mixed material layer of the electrode substrate.

The current collector, the electrode mixed material layer, and the porous membrane layer are not particularly limited and can be any current collector, electrode mixed material layer, and porous membrane layer that can be used in the field of secondary batteries, such as any of those described in JP2013-145763A, for example.

<<Separator substrate>>

A known separator substrate such as an organic separator substrate can be used as a separator substrate without any particular limitations. The organic separator substrate is a porous member made of an organic material. Examples of organic separator substrates include fine porous membranes or non-woven fabrics containing, for example, a polyolefin resin such as polyethylene or polypropylene or an aromatic polyamide resin. Polyethene fine porous membranes or non-woven fabrics are preferable for their good strength. Moreover, from the perspective of safety, a heat-resistant separator obtained by applying ceramic onto the aforementioned separator is preferable.

A porous membrane layer may be formed on one surface or both surfaces of the separator substrate. The porous membrane layer is a layer containing non-conductive particles such as described in JP2013-145763A, for example.

«Releasable substrate»

A publicly known releasable substrate can be used as a releasable substrate without any particular limitations.

<Drying step>

In the drying step, the composition for adhesive layer applied onto the substrate is dried to form an adhesive

layer made of a dried product of the composition for adhesive layer on the substrate. A publicly known drying method can be used as a drying method without any particular limitations. Examples of the drying method include a drying method using a heating device such as a heater, a dryer, and a heating roller. The drying conditions are not particularly limited. However, the dry temperature is preferably 50°C or more and 90°C or less, and the drying time is preferably 1 second or more and 120 seconds or less.

<Peeling step>

In the peeling step, the adhesive layer for non-aqueous secondary battery formed on the substrate is peeled. When the adhesive layer for non-aqueous secondary battery is formed on a releasable substrate, the adhesive layer is peeled from the releasable substrate and then, for example, can be provided for production of a laminate for non-aqueous secondary battery, which is described below.

(Laminate for non-aqueous secondary battery)

The laminate for non-aqueous secondary battery of the present disclosure is a laminate for non-aqueous secondary battery including an electrode and a separator. The electrode and the separator are bonded to each other via the aforementioned adhesive layer for non-aqueous secondary battery of the present disclosure. The electrode that is affixed to the separator to form the laminate for non-aqueous secondary battery may be just a positive electrode, just a negative electrode, or both a positive electrode and a negative electrode. Moreover, in a case in which both a positive electrode and a negative electrode are affixed to a separator to obtain the laminate for non-aqueous secondary battery, the number of positive electrodes, the number of negative electrodes, and the number of separators included in the laminate for non-aqueous secondary battery may be 1 or may be 2 or more. In other words, the structure of the laminate for non-aqueous secondary battery of the present disclosure may be any of the following structures (1) to (6).

(1) Positive electrode/Separator
(2) Negative electrode/Separator
(3) Positive electrode/Separator/Negative electrode
(4) Positive electrode/Separator/Negative electrode/Separator
(5) Separator/Positive electrode/Separator/Negative electrode
(6) Structure in which positive electrodes and negative electrodes are stacked alternately with separators in-between (for example, "separator/negative electrode/separator/positive electrode/separator/negative electrode.../separator/positive electrode", etc.)

<Electrode>

A known electrode can be used as an electrode without any particular limitations. For example, the electrode described in "Method of producing adhesive layer for non-aqueous secondary battery" section can be used.

<Separator>

A known separator can be used as a separator without any particular limitations. For example, the separator described in "Method of producing adhesive layer for non-aqueous secondary battery" section can be used.

<Adhesive layer>

The adhesive layer that bonds the electrode to the separator is a dried product of the composition for non-aqueous secondary battery adhesive layer of the present disclosure as described above. That is, the dried product contains at least a polymer derived from the particulate polymer and optionally contains the aforementioned other components.

Moreover, the preferable form (diameter of the dots, thickness of the dots, pitch of the dots, ratio of coverage, amount, etc.) of the adhesive layer is the same as that described in <Adhesive layer for non-aqueous secondary battery> section.

Furthermore, although the particulate polymer is in a particulate form in the composition for non-aqueous secondary battery adhesive layer, the particulate polymer may be in a particulate form or in any other form in the adhesive layer for non-aqueous secondary battery in the laminate.

(Method of producing laminate for non-aqueous secondary battery)

The method of producing a laminate for non-aqueous secondary battery of the present disclosure includes a step of supplying an adhesive material onto an affixing surface (i.e., surface on which the adhesive material (adhesive layer) is formed) of at least one of the electrode and the separator (supplying step) and a step of affixing the electrode and the separator to each other by pressurization at normal temperature via the affixing surface to which the adhesive material has been supplied (affixing step). The method of producing a laminate for non-aqueous secondary battery of the present disclosure may also include a step of cutting the resulting affixed body (cutting step) after the affixing step.

<Supplying step>

In the supplying step, the adhesive material is supplied onto the affixing surface of at least one of the electrode (positive electrode, negative electrode) and the separator. The adhesive material can be supplied by applying the composition for non-aqueous secondary battery adhesive layer of the present disclosure by the inkjet method and drying it. Alternatively, the adhesive material may be supplied by transferring (laminating) the adhesive layer for non-aqueous secondary battery obtained by peeling it from the releasable substrate as described above onto the affixing surface.

The conditions of the inkjet method are not particularly limited so long as the composition for non-aqueous secondary battery adhesive layer can be applied. The conditions can be adjusted as appropriate depending on the desired form (shape in plan-view, diameter of the dots, thickness of the dots, pitch of the dots, ratio of coverage, amount, etc.) of the resulting adhesive material.

When the composition for non-aqueous secondary battery adhesive layer is applied by the inkjet method, the electrode and the separator are conveyed to an affixing start position without bringing another member into contact with the affixing surface onto which the composition for non-aqueous secondary battery adhesive layer has been supplied, while the composition for non-aqueous secondary battery adhesive layer can be dried during the conveyance. By not bringing another member into contact with the affixing surface onto which the composition for non-aqueous secondary battery adhesive layer has been supplied, problems such as blocking do not occur, which makes it possible to efficiently produce the laminate for secondary battery. When the adhesive layer for non-aqueous secondary battery obtained by peeling it from the releasable substrate is supplied, drying is not necessary.

Note that the term "affixing start position" as used in the present disclosure refers to a position at which an affixing surface of an electrode and an affixing surface of a separator are brought into contact when the electrode and the separator are being affixed to each other.

The conveying of the electrode and the separator can be performed using any conveying mechanism such as a roller, a belt conveyor, a manipulator, or a suction band, for example, without any particular limitations. Of these examples, it is preferable that at least one of the electrode and the separator is conveyed using a roller from a viewpoint of further increasing the production efficiency of the laminate for secondary battery.

The drying of the composition for non-aqueous secondary battery adhesive layer can be performed using any heating device such as a heater, a dryer, or a heating roller without any particular limitations. The temperature during the drying of the electrode and/or separator to which the composition for non-aqueous secondary battery adhesive layer has been supplied is not particularly limited but is preferably 50°C or more and 90°C or less. The drying time is not particularly limited but is preferably 1 second or more and 120 seconds or less.

<Affixing step>

In the affixing step, the electrode and the separator are affixed to each other via the affixing surface. This affixing can be performed through pressurization of a laminate in which the electrode and the separator are stacked via the affixing surface, at normal temperature.

The pressure applied when pressurizing the laminate can be adjusted as appropriate depending on the type and amount of the particulate polymer to be used but is preferably more than 1 MPa and 5 MPa or less.

<Cutting step >

The cutting step is a step of cutting the affixed body obtained in the affixing step to desired dimensions. The cutting can be performed using any cutting machine that can be used in the field of production of secondary batteries, such as a cutting machine that cuts the affixed body from both sides in the thickness direction thereof by sandwiching the affixed body with cutting edges, for example.

«Electrode and separator»

Known electrode and separator can be used as an electrode and a separator without any particular limitations. For example, the electrode and the separator as described in "Method of producing adhesive layer for non-aqueous secondary battery" section can be used.

«Adhesive material»

The adhesive material that bonds the electrode to the separator is a dried product of the composition for non-aqueous secondary battery adhesive layer of the present disclosure. That is, the dried product contains at least a polymer derived from the particulate polymer and optionally contains the aforementioned other components.

Moreover, the preferable form (diameter of the dots, thickness of the dots, pitch of the dots, ratio of coverage, amount, etc.) of the adhesive material is the same as that described in <Adhesive layer for non-aqueous secondary battery> section.

Furthermore, although the particulate polymer is in a particulate form in the composition for non-aqueous secondary battery adhesive layer, the particulate polymer may be in a particulate form or in any other form in the adhesive layer for non-aqueous secondary battery in the laminate after pressurization.

The following describes one exemplary production process of the laminate for non-aqueous secondary battery of the present disclosure with reference to FIG. 2.

With reference to FIG. 2, an elongated first separator web 10A fed out from a first separator web roll is affixed to one surface of a negative electrode material formed of an elongated negative electrode web 20A fed out from a negative electrode web roll via an adhesive material supplied from a coater 51. Simultaneously, an elongated second separator web 30A fed out from a second separator web roll is affixed to the other surface of the negative electrode material formed of the negative electrode web 20A via an adhesive material supplied from a coater 52. The affixing can be performed using, for example, pressure bonding rollers 61 and 62. Then, positive electrodes 40 are affixed at a predetermined arrangement pitch to a surface opposite to the negative electrode web 20A side of the first separator web 10A via an adhesive material supplied from a coater 53 to obtain an affixed body including a positive electrode. In FIG. 2, an adhesive material is supplied from a coater 54 to a surface opposite the negative electrode web 20A side of the second separator web 30A, which allows laminates to be well bonded to each other when producing a stacked body by stacking the laminates obtained by cutting the affixed body between the positive electrodes 40 adjacent in a longitudinal direction. Then, the affixed body is cut using a cutting machine 70 to obtain laminates.

(Non-aqueous secondary battery)

The non-aqueous secondary battery of the present disclosure includes the laminate for non-aqueous secondary battery of the present disclosure. The non-aqueous secondary battery of the present disclosure includes, for example, electrodes (positive electrode and negative electrode), an electrolyte solution, and a separator. At least one of the positive electrode and the negative electrode is affixed to the separator via the adhesive layer for non-aqueous secondary battery of the present disclosure to form the laminate for non-aqueous secondary battery of the present disclosure. The non-aqueous secondary battery of the present disclosure includes the laminate for non-aqueous secondary battery of the present disclosure and thus may exert excellent battery characteristics.

<Electrode>

A known electrode can be used as an electrode used for the secondary battery of the present disclosure without any limitations. For example, the electrode described in "Method of producing adhesive layer for non-aqueous secondary battery" section can be used.

<Separator>

A known separator can be used as a separator used for the secondary battery of the present disclosure without any limitations. For example, the separator described in "Method of producing adhesive layer for non-aqueous secondary battery" section can be used.

<Electrolyte solution>

An organic electrolyte solution obtained by dissolving a supporting electrolyte in an organic solvent is usually used as an electrolyte solution used for the secondary battery of the present disclosure. For example, when the non-aqueous secondary battery is a lithium ion secondary battery, lithium salt is used as a supporting electrolyte. Examples of lithium salt include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable and $LiPF_6$ is particularly preferable as these lithium salts readily dissolve in a solvent and exhibit a high degree of dissociation. One of these electrolytes may be used individually, or two or more of these electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte.

The organic solvent used in the electrolyte solution is not particularly limited so long as the supporting electrolyte can dissolve therein. Examples of suitable organic solvents include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of these solvents may be used. Of these solvents, carbonates are preferable due to having high permittivity and a wide stable potential region, and a mixture of ethylene carbonate and ethyl methyl carbonate is more preferable.

Moreover, a known additive such as vinylene carbonate (VC), fluoroethylene carbonate (FEC), or ethyl methyl sulfone may be added to the electrolyte solution.

(Method of producing secondary battery)

The secondary battery of the present disclosure can be produced, for example, by rolling or folding a stacked body obtained by stacking the laminates in accordance with the battery shape as necessary to place the stacked body in a device container (battery container), filling the device container with the electrolyte solution, and sealing the device container. The laminate itself may be used as a stacked body, or a plurality of laminates may be stacked to produce a stacked body. The laminate and additional battery members (electrode and/or separator, etc.) may be stacked to produce a stacked body. An overcurrent preventing device such as a fuse or a PTC device; an expanded metal; or a lead plate may be provided in the secondary battery of the present disclosure as necessary in order to prevent inside pressure increase and occurrence of overcharging or overdischarging. The shape of the secondary battery may be a coin type, a button type, a sheet type, a cylinder type, a prismatic type, a flat type, or the like.

## EXAMPLES

The following provides a more specific description of the present disclosure based on Examples. However, the present disclosure is not limited to Examples given below. In the following description, "%" and "part" used in expressing quantities are by mass unless otherwise specified.

Moreover, in the case of a polymer that is produced through copolymerization of a plurality of types of monomers, the proportion constituted by a monomer unit that is formed through polymerization of a given monomer in the polymer is normally, unless otherwise specified, the same as the ratio (charging ratio) of the given monomer among all monomers used in polymerization of the polymer.

Various measurements and evaluations in Examples and Comparative Examples were performed by the following method.

<Glass-transition temperature>

The water dispersion of the particulate polymer prepared in each of Production Examples was dried under a temperature of 130°C for 1 hour to make a sample. A differential scanning calorimetry (DSC) curve was measured by weighing 10 mg of the measurement sample into an aluminum pan and then performing measurement thereof under conditions prescribed by JIS Z8703 with a measurement temperature range of -100°C to 200°C and a heating rate of 10°C/min, using a differential scanning calorimeter ("EXSTAR DSC6220" produced by SII NanoTechnology Inc.). An empty aluminum pan was used as a reference. In the heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as a glass-transition temperature (°C).

<Volume-average particle diameter>

The volume-average particle diameter of the particulate polymer prepared in each of Production Examples was measured by laser diffraction. Specifically, a water dispersion solution containing the prepared particulate polymer (solid

content concentration: 0.1 mass%) was used as a sample. A volume-average particle diameter D50 (nm) was taken to be a particle diameter at which, in a particle size distribution (by volume) obtained by a laser diffraction particle size analyzer (produced by Beckman Coulter, Inc.; product name: "LS-13 320"), cumulative volume calculated from the small diameter end of the distribution reached 50%.

<Degree of swelling in electrolyte solution>

The water dispersion of the particulate polymer prepared in each of Production Examples was dried, approximately 0.2 g of the resulting dried product was pressed for 2 minutes under pressing conditions of a temperature of 200°C and a pressure of 5 MPa. The resulting film was cut into a 1 cm square to provide a test specimen, and a mass W1 (g) of the test specimen was measured. Next, the test specimen was immersed in an electrolyte solution (liquid obtained by dissolving $LiPF_6$ at a concentration of 1 mol/L in a mixed solvent of ethylene carbonate/diethyl carbonate = 3/7 (volume ratio)) at a temperature of 60°C for 72 hours. Thereafter, the test specimen was taken out from the electrolyte solution, the mixed solvent on the surface was wiped off, and a mass W2 (g) of the test specimen was then measured. Then, the degree of swelling (%) was calculated according to the following formula.

$$\text{Degree of swelling in electrolyte solution (\%)} = W2/W1 \times 100$$

<Amount of adhesive layer>

The amount of the adhesive layer was determined from a difference between the mass per unit area before the composition for adhesive layer is supplied and the mass per unit area after the composition for adhesive layer is supplied and dried, on the substrate.

<Ratio of coverage of adhesive layer>

The center distances (pitches) x and y of the dots and the radius r of the dots were measured in a region where the adhesive material was disposed (applied) in a dotted pattern, using a laser microscope (produced by Keyence Corporation; VR-3100). Then, the ratio of coverage of the adhesive layer was determined by formula (2) below, using these values.

$$\text{Ratio of coverage of adhesive layer} = \{\pi r^2/(x \bullet y)\} \times 100\ (\%) \ \ldots\ (2)$$

<Pressure sensitivity of adhesive force>

The composition for non-aqueous secondary battery adhesive layer produced in each of Examples and Comparative Examples was applied to the rough surface side of a PET substrate (polyester film PTHA-25 produced by UNITIKA LTD.) with a bar coater. Next, the drying was performed at 50°C for 2 minutes to form a thin membrane with an amount after drying of 4 to 5 g/$m^2$ on the PET substrate. Thereafter, the PET substrate was punched to 10 × 50 mm and then stacked on a PE separator (ND412 produced by Asahi Kasei Corp.; surface roughness Sa: 0.10 to 0.20 μm) cut to 25 × 60 mm. They are pressed under conditions of a temperature of 25°C, a pressure of 1 MPa, and a pressing time of 10 seconds, by a precision press machine, to make an evaluation sample. Thereafter, the evaluation sample was fixed by affixing the PE separator side onto the seat of a peel test apparatus (load cell) with double-sided tape, the PET substrate was pulled at a peeling angle of 90° and a rate of 50 mm/min to measure the peel strength. The peel strength was also measured on an evaluation sample subjected to precision pressing under conditions of a temperature of 25°C, a pressure of 3 MPa, and a pressing time of 10 seconds. The "pressure sensitivity" was taken to be a value obtained by dividing a difference between the peel strength when the pressing was performed at a pressure of 3 MPa and the peel strength when the pressing was performed at a pressure of 1 MPa by 2.

<Inkjet discharge characteristics>

Discharge test was performed on the composition for non-aqueous secondary battery adhesive layer produced in each of Examples and Comparative Examples, using a discharge experiment kit with high performance head (IJK-200S; produced by MICROJET Corporation). Then, discharge characteristics were evaluated by the following standard:

A: Discharge is possible, and re-discharge is also possible even after a standing time of 5 minutes or more;

B: Discharge is possible, but re-discharge is impossible after a standing time of 5 minutes; and
C: Discharge is impossible.

<Adhesive force between electrode and separator>

Under the same conditions as those in each of Examples and Comparative Examples, a negative electrode with one surface on which an adhesive layer (adhesive material) had been applied and a separator were pressed for 10 seconds under pressing conditions of a temperature of 25°C and a pressure of 2 MPa and affixed to each other. The resulting laminate (i.e., laminate obtained by affixing one negative electrode and one separator to each other via the adhesive material) was taken to be a test specimen.
The test specimen was placed with the surface at the current collector-side of the negative electrode facing downward, and cellophane tape was attached to the surface at the current collector-side of the negative electrode. Tape prescribed by JIS Z1522 was used as the cellophane tape. The cellophane tape had been affixed to a horizontal test stage beforehand. One end of the separator was pulled vertically upward at a pulling rate of 50 mm/min and the stress when the separator was peeled off was measured.
This measurement was made 6 times. An average value for the stress was determined as the peel strength, and the adhesiveness between the negative electrode and the separator was evaluated by the following standard. A larger peel strength indicates a higher adhesiveness between the electrode (negative electrode) and the separator.

A: Peel strength of 5.0 N/m or more
B: Peel strength of 3.0 N/m or more and less than 5.0 N/m
C: Peel strength of 0.5 N/m or more and less than 3.0 N/m
D: Peel strength of 0.3 N/m or more and less than 0.5 N/m
E: Peel strength of less than 0.3 N/m

<Rate of lithium deposition on negative electrode surface>

A produced lithium ion secondary battery was fully charged to a state of charge (SOC) of 100% with a 1C constant current in an environment having a temperature of -10°C. The fully charged secondary battery was disassembled to remove the negative electrode, and the surface state of a negative electrode mixed material layer of the negative electrode was observed. The area of lithium deposited on the surface of the negative electrode mixed material layer was measured, and the rate of lithium deposition on the negative electrode surface (= (area of deposited lithium/area of surface of negative electrode mixed material layer) × 100(%)) was calculated. The rate of lithium deposition was evaluated by the following standard. A smaller rate of lithium deposition on the negative electrode surface indicates that lithium deposition on the negative electrode surface during charging was suppressed.

A: Rate of lithium deposition of less than 10%
B: Rate of lithium deposition of 10% or more and less than 15%
C: Rate of lithium deposition of 15% or more and less than 20%
D: Rate of lithium deposition of 20% or more

<Output characteristics>

A produced lithium ion secondary battery was constant-current constant-voltage (CCCV) charged to 4.3 V in an atmosphere having a temperature of 25°C to prepare a cell. Thereafter, the electric capacities when the prepared cell was discharged to 3.0 V by 0.2C and 1C constant-current methods in an atmosphere having a temperature of -10°C were determined. A discharge capacity maintenance rate expressed by the ratio of the electric capacities (= (electric capacity at 1C/electric capacity at 0.2C) × 100 (%)) was determined. These measurements were performed on five lithium ion secondary battery cells and the average value of the determined discharge capacity maintenance rates of the cells was evaluated by the following standard as an output characteristic. A larger value indicates better output characteristics.

A: Average value of discharge capacity maintenance rates of 80% or more
B: Average value of discharge capacity maintenance rates of 70% or more and less than 80%
C: Average value of discharge capacity maintenance rates of 60% or more and less than 70%
D: Average value of discharge capacity maintenance rates of less than 60%

<Resistance increase in cycle test>

A produced lithium ion secondary battery was fastened with a pressurization jig to have a surface pressure of 1 MPa, and then a cycle test at 45°C was performed. Charge/discharge cycling was repeated for 500 times with cycle test conditions of 1C CC + CV charge (4.3 V; 1/50C Cut) and 1C CC discharge (3.0 V Cut). Thereafter, the temperature was lowered to 25°C with the lithium ion secondary battery being fastened with the pressurization jig, and the output characteristics were measured in the same way as in <Output characteristics> section set forth above. A resistance maintenance rate (%) before and after the cycling (= discharge capacity maintenance rate after cycle test/discharge capacity maintenance rate before cycle test × 100) was calculated and evaluated by the following standard. A larger resistance maintenance rate before and after the cycling indicates a smaller resistance increase in the cycle test.

A: Resistance maintenance rate of 80% or more
B: Resistance maintenance rate of 60% or more and less than 80%
C: Resistance maintenance rate of 40% or more and less than 60%
D: Resistance maintenance rate of less than 40%

(Production Example 1)

<Production of particulate polymer 1>

A reactor equipped with a stirrer was supplied with 100 parts of deionized water, 0.3 parts of ammonium persulfate, and 0.02 parts of sodium dodecylbenzenesulfonate (produced by Kao Corporation, "NEOPELEX G-15") as an emulsifier. The gas phase was purged with nitrogen gas and the temperature was raised to 80°C. On the other hand, 40 parts of deionized water, 0.2 parts of sodium dodecylbenzenesulfonate as an emulsifier, 27.4 parts of styrene as an aromatic monovinyl monomer, 64.5 parts of 2-ethylhexyl acrylate as a monofunctional (meth)acrylic acid ester monomer, 3 parts of methacrylic acid as an acidic group-containing monomer, and 0.1 parts of ethylene glycol dimethacrylate as a cross-linkable monomer are mixed in another vessel to obtain a monomer composition for core portion formation. This monomer composition for core portion formation was continuously added to the reactor over a period of 3 hours to perform polymerization reaction at a temperature of 80°C. Polymerization was continued until the polymerization conversion rate reached 95% to obtain a water dispersion containing a particulate polymer forming a core portion. Next, this water dispersion was continuously supplied with a monomer composition for shell portion formation containing 4.1 parts of styrene as an aromatic monovinyl monomer, 0.8 parts of methoxy polyethylene glycol methacrylate (product name: "NK Ester M90G"; produced by SHIN-NAKAMURA CHEMICAL Co., Ltd.) as an alkylene oxide group-containing monomer unit, and 0.1 parts of methacrylic acid as an acidic group-containing monomer, over a period of 60 minutes, to continue the polymerization. Once the polymerization conversion rate reached 98%, the reaction was terminated by cooling to prepare a water dispersion containing a particulate polymer 1.

The volume-average particle diameter, the degree of swelling, and the glass-transition temperature of the resulting particulate polymer 1 were measured. The results are presented in Table 1.

Moreover, by observing a cross-sectional structure of the particulate polymer using a transmission electron microscope (TEM), it was confirmed that the particulate polymer had a core-shell structure in which the shell portion partially covers the outer surface of the core portion.

(Production Example 2)

<Production of particulate polymer 2>

A water dispersion of a particulate polymer 2 having a core-shell structure was prepared in the same way as in Production Example 1, except for using a monomer composition for shell portion formation containing 2.4 parts of styrene as an aromatic monovinyl monomer, 2.5 parts of methoxy polyethylene glycol methacrylate as an alkylene oxide group-containing monomer, and 0.1 parts of methacrylic acid as an acidic group-containing monomer, instead of the monomer composition for shell portion formation containing 4.1 parts of styrene as an aromatic monovinyl monomer, 0.8 parts of methoxy polyethylene glycol methacrylate as an alkylene oxide group-containing monomer unit, and 0.1 parts of methacrylic acid as an acidic group-containing monomer, in the production of the particulate polymer in Production Example 1. Then, various measurements and the like were performed as in Production Example 1. The results are presented in Table 1.

(Production Example 3)

<Production of particulate polymer 3>

A water dispersion of a particulate polymer 3 having a core-shell structure was prepared in the same way as in Production Example 1, except for using a monomer composition for shell portion formation containing 4.65 parts of styrene as an aromatic monovinyl monomer, 0.25 parts of methoxy polyethylene glycol methacrylate as an alkylene oxide group-containing monomer, and 0.1 parts of methacrylic acid as an acidic group-containing monomer, instead of the monomer composition for shell portion formation containing 4.1 parts of styrene as an aromatic monovinyl monomer, 0.8 parts of methoxy polyethylene glycol methacrylate as an alkylene oxide group-containing monomer unit, and 0.1 parts of methacrylic acid as an acidic group-containing monomer, in the production of the particulate polymer in Production Example 1. Then, various measurements and the like were performed as in Production Example 1. The results are presented in Table 1.

(Production Example 4)

<Production of particulate polymer 4>

A water dispersion of a particulate polymer 4 having a core-shell structure was prepared in the same way as in Production Example 1, except for using a monomer composition for shell portion formation containing 4.1 parts of styrene as an aromatic monovinyl monomer, 0.8 parts of methoxy polyethylene glycol acrylate (product name: "NK Ester AM90G"; produced by SHIN-NAKAMURA CHEMICAL Co., Ltd.) as an alkylene oxide group-containing monomer, and 0.1 parts of methacrylic acid as an acidic group-containing monomer, instead of the monomer composition for shell portion formation containing 4.1 parts of styrene as an aromatic monovinyl monomer, 0.8 parts of methoxy polyethylene glycol methacrylate as an alkylene oxide group-containing monomer unit, and 0.1 parts of methacrylic acid as an acidic group-containing monomer, in the production of the particulate polymer in Production Example 1. Then, various measurements and the like were performed as in Production Example 1. The results are presented in Table 1.

(Production Example 5)

<Production of particulate polymer 5>

A water dispersion of a particulate polymer 5 having a core-shell structure was prepared in the same way as in Production Example 1, except for using a monomer composition for core portion formation containing 17.8 parts of styrene as an aromatic monovinyl monomer, 49.1 parts of 2-ethylhexyl acrylate as a monofunctional (meth)acrylic acid ester monomer, 3 parts of methacrylic acid as an acidic group-containing monomer, and 0.1 parts of ethylene glycol dimethacrylate as a cross-linkable monomer, instead of the monomer composition for core portion formation containing 27.4 parts of styrene as an aromatic monovinyl monomer, 64.5 parts of 2-ethylhexyl acrylate as a monofunctional (meth)acrylic acid ester monomer, 3 parts of methacrylic acid as an acidic group-containing monomer, and 0.1 parts of ethylene glycol dimethacrylate as a cross-linkable monomer, and for using a monomer composition for shell portion formation containing 25 parts of styrene as an aromatic monovinyl monomer, 4 parts of methoxy polyethylene glycol methacrylate as an alkylene oxide group-containing monomer, and 1 part of methacrylic acid as an acidic group-containing monomer, instead of the monomer composition for shell portion formation containing 4.1 parts of styrene as an aromatic monovinyl monomer, 0.8 parts of methoxy polyethylene glycol methacrylate as an alkylene oxide group-containing monomer, and 0.1 parts of methacrylic acid as an acidic group-containing monomer, in the production of the particulate polymer in Production Example 1. Then, various measurements and the like were performed as in Production Example 1. The results are presented in Table 1.

(Production Example 6)

<Production of particulate polymer 6>

A water dispersion of a particulate polymer 6 having a core-shell structure was prepared in the same way as in Production Example 1, except for using a monomer composition for core portion formation containing 18.5 parts of styrene as an aromatic monovinyl monomer, 72.6 parts of butyl acrylate as a monofunctional (meth)acrylic acid ester monomer, 2.9 parts of methacrylic acid as an acidic group-containing monomer, and 1 part of ethylene glycol dimethacrylate as a cross-linkable monomer, instead of the monomer composition for core portion formation containing 27.4 parts of styrene as an aromatic monovinyl monomer, 64.5 parts of 2-ethylhexyl acrylate as a monofunctional (meth)acrylic

acid ester monomer, 3 parts of methacrylic acid as an acidic group-containing monomer, and 0.1 parts of ethylene glycol dimethacrylate as a cross-linkable monomer, in the production of the particulate polymer in Production Example 1. Then, various measurements and the like were performed as in Production Example 1. The results are presented in Table 1.

(Production Example 7)

<Production of particulate polymer 7>

A water dispersion of a particulate polymer 7 having a core-shell structure was prepared in the same way as in Production Example 1, except for using a monomer composition for core portion formation containing 72.4 parts of butyl acrylate and 18.7 parts of methyl methacrylate as monofunctional (meth)acrylic acid ester monomers, 2.9 parts of methacrylic acid as an acidic group-containing monomer, and 1 part of ethylene glycol dimethacrylate as a cross-linkable monomer, instead of the monomer composition for core portion formation containing 27.4 parts of styrene as an aromatic monovinyl monomer, 64.5 parts of 2-ethylhexyl acrylate as a monofunctional (meth)acrylic acid ester monomer, 3 parts of methacrylic acid as an acidic group-containing monomer, and 0.1 parts of ethylene glycol dimethacrylate as a cross-linkable monomer, in the production of the particulate polymer in Production Example 1. Then, various measurements and the like were performed as in Production Example 1. The results are presented in Table 1.

(Production Example 8)

<Production of particulate polymer 8>

A water dispersion of a particulate polymer 8 having a core-shell structure was prepared in the same way as in Production Example 1, except for using a monomer composition for core portion formation containing 17.4 parts of styrene as an aromatic monovinyl monomer, 64.5 parts of 2-ethylhexyl acrylate as a monofunctional (meth)acrylic acid ester monomer, 10 parts of acrylonitrile as a (meth)acrylonitrile monomer, 3 parts of methacrylic acid as an acidic group-containing monomer, and 0.1 parts of ethylene glycol dimethacrylate as a cross-linkable monomer, instead of the monomer composition for core portion formation containing 27.4 parts of styrene as an aromatic monovinyl monomer, 64.5 parts of 2-ethylhexyl acrylate as a monofunctional (meth)acrylic acid ester monomer, 3 parts of methacrylic acid as an acidic group-containing monomer, and 0.1 parts of ethylene glycol dimethacrylate as a cross-linkable monomer, in the production of the particulate polymer in Production Example 1. Then, various measurements and the like were performed as in Production Example 1. The results are presented in Table 1.

(Production Example 9)

<Production of particulate polymer 9>

A reactor equipped with a stirrer was supplied with 90 parts of deionized water and 0.5 parts of ammonium persulfate. The gas phase was purged with nitrogen gas and the temperature was raised to 80°C. On the other hand, 15 parts of deionized water, 1.0 parts of sodium dodecylbenzenesulfonate (produced by Kao Corporation, "NEOPELEX G-15") as an emulsifier, 70.0 parts of 2-ethylhexyl acrylate as a monofunctional (meth)acrylic acid ester monomer, 25.0 parts of styrene as an aromatic monovinyl monomer, 1.7 parts of allyl glycidyl ether and 0.3 parts of allyl methacrylate as cross-linkable monomers, and 3.0 parts of acrylic acid as an acidic group-containing monomer were mixed in another vessel to obtain a monomer composition.

The monomer composition was continuously added to the reactor over a period of 4 hours for polymerization. The reaction was performed at a temperature of 80°C during the continuous addition. After the end of the continuous addition, stirring was further performed at a temperature of 80°C for 3 hours to end the reaction.

After the resulting water dispersion was cooled to a temperature of 25°C, the pH was adjusted to 8.0 through addition of a sodium hydroxide aqueous solution. Thereafter, steam was introduced to remove unreacted monomers and obtain a water dispersion of a particulate polymer 9 not having a core-shell structure. Then, various measurements were performed as in Production Example 1. The results are presented in Table 1.

(Production Example 10)

<Production of particulate polymer 10>

A reactor equipped with a stirrer was supplied with 90 parts of deionized water, 0.05 parts of sodium dodecylbenzenesulfonate (produced by Kao Corporation, "NEOPELEX G-15") as an emulsifier, and 0.23 parts of ammonium

persulfate. The gas phase was purged with nitrogen gas and the temperature was raised to 70°C.

On the other hand, 50 parts of deionized water, 0.1 parts of sodium dodecylbenzenesulfonate (produced by Kao Corporation, "NEOPELEX G-15") as an emulsifier, 2.5 parts of methacrylic acid (MAA) as an acid functionality-containing monomer, 10 parts of acrylonitrile (AN) as a (meth)acrylonitrile monomer, 85.3 parts of n-butyl acrylate (BA) as a monofunctional (meth)acrylic acid ester monomer, 0.2 parts of allyl methacrylate (AMA) as a cross-linkable monomer, and 2.0 parts of acrylamide (Aam) as a (meth)acrylamide monomer were mixed in another vessel to obtain a monomer composition. The monomer composition was continuously added to the reactor over a period of 4 hours for polymerization. The reaction was performed at 80°C during the addition. After the end of the addition, stirring was further performed at 80°C for 3 hours, and then the reaction was ended to produce a water dispersion containing a particulate polymer 10 not having a core-shell structure. Then, various measurements and the like were performed as in Production Example 1. The results are presented in Table 1.

(Comparative Production Example 1)

<Production of particulate polymer 11>

A water dispersion of a particulate polymer 11 having a core-shell structure was prepared in the same way as in Production Example 5, except for using a monomer composition for shell portion formation containing 29 parts of styrene as an aromatic monovinyl monomer and 1 part of methacrylic acid as an acidic group-containing monomer, instead of the monomer composition for shell portion formation containing 4.1 parts of styrene as an aromatic monovinyl monomer, 0.8 parts of methoxy polyethylene glycol methacrylate as an alkylene oxide group-containing monomer, and 0.1 parts of methacrylic acid as an acidic group-containing monomer, in the production of the particulate polymer in Production Example 5. Then, various measurements and the like were performed as in Production Example 1. The results are presented in Table 1.

(Comparative Production Example 2)

<Production of particulate polymer 12>

A water dispersion of a particulate polymer 12 not having a core-shell structure was prepared in the same way as in Production Example 1, except for using a monomer composition for core portion formation containing 28.9 parts of styrene as an aromatic monovinyl monomer, 68 parts of 2-ethylhexyl acrylate as a monofunctional (meth)acrylic acid ester monomer, 3 parts of methacrylic acid as an acidic group-containing monomer, and 0.1 parts of ethylene glycol dimethacrylate as a cross-linkable monomer, instead of the monomer composition for core portion formation containing 27.4 parts of styrene as an aromatic monovinyl monomer, 64.5 parts of 2-ethylhexyl acrylate as a monofunctional (meth)acrylic acid ester monomer, 3 parts of methacrylic acid as an acidic group-containing monomer, and 0.1 parts of ethylene glycol dimethacrylate as a cross-linkable monomer, and for not supplying the monomer composition for shell portion formation, in the production of the particulate polymer in Production Example 1. Then, various measurements and the like were performed as in Production Example 1. The results are presented in Table 1.

(Example 1)

<Preparation of composition for adhesive layer>

The water dispersion of the particulate polymer 1 obtained in Production Example 1 and the water dispersion of the particulate polymer 9 obtained in Production Example 9 were mixed so that the mass ratio of solid contents was 100:10. Furthermore, deionized water was added to dilute the resulting mixture to have a solid content concentration of 10.5%. Propylene glycol was further added to the resulting mixture to adjust the solid content concentration to 10%, thus obtaining a composition for adhesive layer.

<Production of negative electrode web>

A 5 MPa pressure vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. The contents of the pressure vessel were sufficiently stirred and were then heated to 50°C to initiate polymerization. Once the polymerization conversion rate reached 96%, the reaction was terminated by cooling to obtain a mixture containing a binder for negative electrode mixed material layer (SBR). The mixture containing the binder for negative electrode mixed material layer was adjusted to pH 8 through

addition of 5% sodium hydroxide aqueous solution, and then unreacted monomer was removed by thermal-vacuum distillation. Thereafter, the mixture was cooled to 30°C or less to obtain a water dispersion containing the desired binder for negative electrode mixed material layer.

Next, 100 parts of artificial graphite (volume-average particle diameter: 15.6 μm) as a negative electrode active material, 1 part in terms of solid content of a 2% aqueous solution of a sodium salt of carboxymethyl cellulose (produced by Nippon Paper Industries Co., Ltd., product name: "MAC350HC") as a viscosity modifier, and deionized water were mixed and adjusted to have a solid content concentration of 68%, and then these materials were further mixed for 60 minutes at a temperature of 25°C. Deionized water was further used to adjust the solid content concentration to 62%, and further mixing was then performed for 15 minutes at a temperature of 25°C. 1.5 parts in terms of solid content of the water dispersion containing the aforementioned binder for negative electrode mixed material layer, and deionized water were added to the resulting mixed solution, the final solid content concentration was adjusted to 52%, and a further 10 minutes of mixing was performed. The resulting mixture was subjected to a defoaming process under reduced pressure to obtain a slurry composition for non-aqueous secondary battery negative electrode having good fluidity.

A comma coater was used to apply the obtained slurry composition for non-aqueous secondary battery negative electrode onto both surfaces of copper foil (current collector) of 20 μm in thickness such as to have a thickness of approximately 150 μm after drying. The applied slurry composition was dried by conveying the copper foil inside an oven at a temperature of 60°C for 2 minutes at a rate of 0.5 m/min. Thereafter, heat treatment was performed for 2 minutes at a temperature of 120°C to obtain a pre-pressing negative electrode web. The pre-pressing negative electrode web was rolled by roll pressing to obtain a post-pressing negative electrode web including a negative electrode mixed material layer of 80 μm in thickness.

<Production of positive electrode web>

100 parts of $LiCoO_2$ having a volume-average particle diameter of 12 μm as a positive electrode active material, 2 parts of acetylene black (produced by Denka Company Limited, product name: "HS-100") as a conductive material, 2 parts in terms of solid content of polyvinylidene fluoride (produced by KUREHA Corporation, product name: "#7208") as a binder, and N-methylpyrrolidone as a solvent were mixed to have a total solid content concentration of 70%. These materials were mixed with a planetary mixer to obtain a slurry composition for non-aqueous secondary battery positive electrode.

A comma coater was used to apply the obtained slurry composition for non-aqueous secondary battery positive electrode onto both surfaces of aluminum foil (current collector) of 20 μm in thickness such as to have a thickness of approximately 150 μm after drying. The applied slurry composition was dried by conveying the aluminum foil inside an oven at a temperature of 60°C for 2 minutes at a rate of 0.5 m/min. Thereafter, heat treatment was performed for 2 minutes at a temperature of 120°C to obtain a positive electrode web.

Then, the obtained positive electrode web was rolled using a roll pressing machine to obtain a post-pressing positive electrode web including a positive electrode mixed material layer.

<Preparation of separator web>

A polyethylene (PE) separator web (product name: "ND412" produced by Asahi Kasei Corp.) was prepared.

<Production of laminate>

A laminate was produced as illustrated in FIG. 3, using the produced composition for adhesive layer, negative electrode web, positive electrode web, and separator web. In FIG. 3, a reference numeral 91 indicates a conveying roller, and a reference numeral 92 indicates a heating roller.

Specifically, while conveying the negative electrode web 20A fed out from the negative electrode web roll at a rate of 10 m/min, the composition for adhesive layer was supplied onto one surface of the negative electrode web 20A from an inkjet head of the ink-jet coater 52 (produced by Konica, KM1024 (shear-mode type)), and the second separator web 30A fed out from the separator web roll and the negative electrode web 20A were then affixed to each other with the pressure bonding rollers 61 and 62. Moreover, the composition for adhesive layer was supplied onto the other surface of the negative electrode web 20A from an inkjet head of the ink-jet coater 51 (produced by Konica, KM1024 (shear-mode type)), and the first separator web 10A fed out from the separator web roll and the laminate of the negative electrode web 20A and the second separator web 30A were then affixed to each other with the pressure bonding rollers 61 and 62. Furthermore, the composition for adhesive layer was supplied onto a surface opposite to the negative electrode web 20A side of the first separator web 10A from an inkjet head of the ink-jet coater 53 (produced by Konica, KM1024 (shear-mode type)), a preliminarily cut positive electrode 40 was placed, and the laminate of the first separator web 10A, the negative electrode web 20A, and the second separator web 30A, and the positive electrode 40 were then affixed to each

other with the pressure bonding rollers 61 and 62. Then, after the composition for adhesive layer was supplied onto the positive electrode 40 from an inkjet head of the ink-jet coater 54 (produced by Konica, KM1024 (shear-mode type)), the affixed body was cut with the cutting machine 70 to obtain a laminate formed by laminating a second separator, a negative electrode, a first separator, and a positive electrode in this order. At the end of each current collector of the positive electrode 40 and the negative electrode web 20A, a part on which the electrode mixed material layer (positive electrode mixed material layer or negative electrode mixed material layer) is not formed is provided. The part has been preliminarily punched to form a tab with a desired size. The laminating was performed so that a positive electrode tab and a negative electrode tab were disposed on the same end edge side of affixing surfaces X and Y of the electrode and the separator.

The affixing using the pressure bonding rollers 61 and 62 was performed at a temperature of 25°C and a pressure of 2 MPa.

Furthermore, the supplied composition for adhesive layer was dried (dry temperature: 70°C; drying time: 1 second) using the heating rollers 92 as parts of the conveying rollers 91.

The supply of the composition for adhesive layer from the coaters 51 to 54 was performed so that the composition for adhesive layer has a uniform dotted pattern. The dot size was 100 $\mu$m in diameter, and the spacing between the dots was 400 $\mu$m pitch. The amount of the adhesive material was 0.2 g/$m^2$. When the ratio of coverage was measured, it was 6.5%.

<Production of secondary battery>

Five laminates produced as described above were stacked and pressed at a temperature of 25°C and a pressure of 2 MPa for 10 seconds to produce a stacked body. The stacked body was enclosed in an aluminum packing case serving as a case, and an electrolyte solution (solvent: ethylene carbonate/diethyl carbonate/vinylene carbonate = 68.5/30/1.5 (volume ratio); electrolyte: $LiPF_6$ of 1 M in concentration) was injected. An opening of the aluminum packing case was subsequently closed by heat sealing at a temperature of 150°C to produce a stacked lithium ion secondary battery having a capacity of 800 mAh. The rate of lithium deposition on the negative electrode surface, the output characteristics, and the resistance increase in the cycle test of the obtained secondary battery were evaluated. The results are presented in Table 2.

(Example 2)

A composition for adhesive layer, a negative electrode web, a positive electrode web, a separator web, a laminate, and a secondary battery were produced and prepared in the same way as in Example 1, except for using the water dispersion of the particulate polymer 2 obtained in Production Example 2, instead of the water dispersion of the particulate polymer 1 obtained in Production Example 1, in the preparation of the composition for adhesive layer in Example 1.

Then, various measurements and evaluations were performed as in Example 1. The results are presented in Table 2.

(Example 3)

A composition for adhesive layer, a negative electrode web, a positive electrode web, a separator web, a laminate, and a secondary battery were produced and prepared in the same way as in Example 1, except for using the water dispersion of the particulate polymer 3 obtained in Production Example 3, instead of the water dispersion of the particulate polymer 1 obtained in Production Example 1, in the preparation of the composition for adhesive layer in Example 1.

Then, various measurements and evaluations were performed as in Example 1. The results are presented in Table 2.

(Example 4)

A composition for adhesive layer, a negative electrode web, a positive electrode web, a separator web, a laminate, and a secondary battery were produced and prepared in the same way as in Example 1, except for using the water dispersion of the particulate polymer 4 obtained in Production Example 4, instead of the water dispersion of the particulate polymer 1 obtained in Production Example 1, in the preparation of the composition for adhesive layer in Example 1.

Then, various measurements and evaluations were performed as in Example 1. The results are presented in Table 2.

(Example 5)

A composition for adhesive layer, a negative electrode web, a positive electrode web, a separator web, a laminate, and a secondary battery were produced and prepared in the same way as in Example 1, except for using the water dispersion of the particulate polymer 5 obtained in Production Example 5, instead of the water dispersion of the particulate polymer 1 obtained in Production Example 1, in the preparation of the composition for adhesive layer in Example 1.
Then, various measurements and evaluations were performed as in Example 1. The results are presented in Table 2.

(Example 6)

A composition for adhesive layer, a negative electrode web, a positive electrode web, a separator web, a laminate, and a secondary battery were produced and prepared in the same way as in Example 1, except for using the water dispersion of the particulate polymer 6 obtained in Production Example 6, instead of the water dispersion of the particulate polymer 1 obtained in Production Example 1, in the preparation of the composition for adhesive layer in Example 1.
Then, various measurements and evaluations were performed as in Example 1. The results are presented in Table 2.

(Example 7)

A composition for adhesive layer, a negative electrode web, a positive electrode web, a separator web, a laminate, and a secondary battery were produced and prepared in the same way as in Example 1, except for using the water dispersion of the particulate polymer 7 obtained in Production Example 7, instead of the water dispersion of the particulate polymer 1 obtained in Production Example 1, in the preparation of the composition for adhesive layer in Example 1.
Then, various measurements and evaluations were performed as in Example 1. The results are presented in Table 2.

(Example 8)

A composition for adhesive layer, a negative electrode web, a positive electrode web, a separator web, a laminate, and a secondary battery were produced and prepared in the same way as in Example 1, except for using the water dispersion of the particulate polymer 8 obtained in Production Example 8, instead of the water dispersion of the particulate polymer 1 obtained in Production Example 1, in the preparation of the composition for adhesive layer in Example 1.
Then, various measurements and evaluations were performed as in Example 1. The results are presented in Table 2.

(Example 9)

A composition for adhesive layer, a negative electrode web, a positive electrode web, a separator web, a laminate, and a secondary battery were produced and prepared in the same way as in Example 1, except for using a polypropylene (PP) separator web (product name: Celgard #2500), instead of the polyethylene (PE) separator web (product name: "ND412" produced by Asahi Kasei Corp.).
Then, various measurements and evaluations were performed as in Example 1. The results are presented in Table 2.

(Example 10)

A composition for adhesive layer, a negative electrode web, a positive electrode web, a separator web, a laminate, and a secondary battery were produced and prepared in the same way as in Example 1, except for using the water dispersion of the particulate polymer 10 obtained in Production Example 10, instead of the water dispersion of the particulate polymer 9 obtained in Production Example 9, in the preparation of the composition for adhesive layer in Example 1.
Then, various measurements and evaluations were performed as in Example 1. The results are presented in Table 2.

(Comparative Example 1)

A composition for adhesive layer, a negative electrode web, a positive electrode web, a separator web, a laminate, and a secondary battery were produced and prepared in the same way as in Example 1, except for using the water dispersion of the particulate polymer 11 obtained in Comparative Production Example 1, instead of the water dispersion of the particulate polymer 1 obtained in Production Example 1, in the preparation of the composition for adhesive layer in Example 1.

Then, various measurements and evaluations were performed as in Example 1. The results are presented in Table 2.

(Comparative Example 2)

A composition for adhesive layer, a negative electrode web, a positive electrode web, and a separator web were produced and prepared in the same way as in Example 1, except for using the water dispersion of the particulate polymer 12 obtained in Comparative Production Example 2, instead of the water dispersion of the particulate polymer 1 obtained in Production Example 1, in the preparation of the composition for adhesive layer in Example 1.

Then, various measurements and evaluations were performed as in Example 1. The results are presented in Table 2. Although the inkjet discharge characteristics of the composition for adhesive layer were evaluated in the same way as in Example 1, the composition for adhesive layer could not be discharged. Therefore, a laminate and a secondary battery could not be produced.

In Table 1 and Table 2, presented below,

"MMA" indicates methyl methacrylate,
"BA" indicates butyl acrylate,
"2EHA" indicates 2-ethylhexyl acrylate,
"AN" indicates acrylonitrile,
"St" indicates styrene,
"MAA" indicates methacrylic acid,
"AA" indicates acrylic acid,
"Aam" indicates acrylamide,
"AGE" indicates allyl glycidyl ether,
"AMA" indicates allyl methacrylate,
"EDMA" indicates ethylene glycol dimethacrylate,
"M90G" indicates "NK Ester M90G" (methoxy polyethylene glycol methacrylate (number of replications of ethylene oxide group $n \approx 9$)) produced by SHIN-NAKAMURA CHEMICAL Co., Ltd.,
"AM90G" indicates "NK Ester AM90G" (methoxy polyethylene glycol acrylate (number of replications of ethylene oxide group $n \approx 9$)) produced by SHIN-NAKAMURA CHEMICAL Co., Ltd.,
"PE" indicates polyethylene, and
"PP" indicates polypropylene.

[Table 1]

| | | | Production Example 1 | Production Example 2 | Production Example 3 | Production Example 4 | Production Example 5 | Production Example 6 | Production Example 7 | Production Example 8 | Production Example 9 | Production Example 10 | Comparative Production Example 1 | Comparative Production Example 2 |
|---|---|---|---|---|---|---|---|---|---|---|---|---|---|---|
| | | | Particulate polymer 1 | Particulate polymer 2 | Particulate polymer 3 | Particulate polymer 4 | Particulate polymer 5 | Particulate polymer 6 | Particulate polymer 7 | Particulate polymer 8 | Particulate polymer 9 | Particulate polymer 10 | Particulate polymer 11 | Particulate polymer 12 |
| | Core portion | MMA | - | - | - | - | - | - | 18.7 | - | - | - | - | - |
| | | BA | - | - | - | - | - | 72.6 | 72.4 | - | - | 85.3 | - | - |
| | | 2EHA | 64.5 | 64.5 | 64.5 | 64.5 | 49.1 | - | - | 64.5 | 70 | - | 49.1 | 68 |
| | | AN | - | - | - | - | - | - | - | 10 | - | 10 | - | - |
| | | St | 27.4 | 27.4 | 27.4 | 27.4 | 17.8 | 18.5 | - | 17.4 | 25 | - | 17.8 | 28.9 |
| | | MAA | 3 | 3 | 3 | 3 | 3 | 2.9 | 2.9 | 3 | - | 2.5 | 3 | 3 |
| | | AA | - | - | - | - | - | - | - | - | 3 | - | - | - |
| | | Aam | - | - | - | - | - | - | - | - | - | 2 | - | - |
| | | AGE | - | - | - | - | - | - | - | - | 1.7 | - | - | - |
| | | AMA | - | - | - | - | - | - | - | - | 0.3 | 0.2 | - | - |
| | | EDMA | 0.1 | 0.1 | 0.1 | 0.1 | 0.1 | 1 | 1 | 0.1 | - | - | 0.1 | 0.1 |
| | Shell portion | St | 4.1 | 2.4 | 4.65 | 4.1 | 25 | 4.1 | 4.1 | 4.1 | - | - | 29 | - |
| | | MAA | 0.1 | 0.1 | 0.1 | 0.1 | 1 | 0.1 | 0.1 | 0.1 | | | 1 | |
| | | M90G | 0.8 | 2.5 | 0.25 | - | 4 | 0.8 | 0.8 | 0.8 | | | - | |
| | | AM90G | - | - | - | 0.8 | - | - | - | | | | - | |
| Mass proportion of shell portion among total of core portion and shell portion (%) | | | 5 | 5 | 5 | 5 | 30 | 5 | 5 | 5 | - | - | 30 | - |
| Glass-transition temperature [°C] | | Core portion | -25 | -28 | -22 | -18 | -15 | -15 | -19 | -17 | -25 | -18 | -18 | -18 |
| | | Shell portion | 95 | 74 | 105 | 95 | 109 | 94 | 95 | 97 | | | 105 | - |

(continued)

| | Production Example 1 | Production Example 2 | Production Example 3 | Production Example 4 | Production Example 5 | Production Example 6 | Production Example 7 | Production Example 8 | Production Example 9 | Production Example 10 | Comparative Production Example 1 | Comparative Production Example 2 |
|---|---|---|---|---|---|---|---|---|---|---|---|---|
| | Particulate polymer 1 | Particulate polymer 2 | Particulate polymer 3 | Particulate polymer 4 | Particulate polymer 5 | Particulate polymer 6 | Particulate polymer 7 | Particulate polymer 8 | Particulate polymer 9 | Particulate polymer 10 | Particulate polymer 11 | Particulate polymer 12 |
| Volume-average particle diameter D50 [nm] | 277 | 278 | 275 | 276 | 303 | 273 | 277 | 268 | 200 | 140 | 302 | 260 |
| Degree of swelling [%] | 170 | 170 | 170 | 170 | 170 | 250 | 1200 | 190 | 170 | 580 | 170 | 180 |

[Table 2]

| | | Example 1 | Example 2 | Example 3 | Example 4 | Example 5 | Example 6 | Example 7 | Example 8 | Example 9 | Example 10 | Comparative Example 1 | Comparative Example 2 |
|---|---|---|---|---|---|---|---|---|---|---|---|---|---|
| Application conditions | Application method | Inkjet | Inkjet | Inkjet | Inkjet | Inkjet | Inkjet | Inkjet | Inkjet | Inkjet | Inkjet | Inkjet | Inkjet |
| | Application pattern | Dot | Dot | Dot | Dot | Dot | Dot | Dot | Dot | Dot | Dot | Dot | Dot |
| | Composition for adhesive layer | Particulate polymer 1 | Particulate polymer 2 | Particulate polymer 3 | Particulate polymer 4 | Particulate polymer 5 | Particulate polymer 6 | Particulate polymer 7 | Particulate polymer 8 | Particulate polymer 1 | Particulate polymer 1 | Particulate polymer 11 | Particulate polymer 12 |
| | | Particulate polymer 9 | Particulate polymer 9 | Particulate polymer 9 | Particulate polymer 9 | Particulate polymer 9 | Particulate polymer 9 | Particulate polymer 9 | Particulate polymer 9 | Particulate polymer 9 | Particulate polymer 10 | Particulate polymer 9 | Particulate polymer 9 |
| | Ratio of coverage of adhesive layer [%] | 6.50 | 6.50 | 6.50 | 6.50 | 6.50 | 6.50 | 6.50 | 6.50 | 6.50 | 6.50 | 650 | Cannot be drawn |
| Material of separator substrate | | PE | PE | PE | PE | PE | PE | PE | PE | PP | PE | PE | PE |
| Pressure sensitivity of adhesive force (N/m/M pa) | | 48 | 56 | 42 | 49 | 5 | 52 | 59 | 44 | 48 | 48 | 5 | 8 |
| Evaluation | Inkjet discharge characteristics | A | B | A | A | A | A | A | A | A | A | A | C |
| | Adhesive force | A | A | B | A | D | A | A | A | B | A | E | - |
| | Rate of lithium deposition on negative electrode surface | A | B | A | A | B | C | C | B | A | A | B | - |
| | Output characteristics | A | B | A | A | B | C | C | B | A | A | B | - |
| | Resistance increase in cycle test | A | B | A | A | B | C | C | B | A | A | B | - |

From the results presented in Table 2, it is found that, in Examples 1 to 10 using the composition for non-aqueous secondary battery adhesive layer containing the particulate polymer having a core-shell structure where the polymer forming the shell portion includes an alkylene oxide group-containing monomer unit, the inkjet discharge characteristics, the adhesive force, and the battery characteristics (output characteristics, resistance increase in the cycle test) can be balanced at high levels. In contrast, it is found that, in Comparative Example 1 using the composition for non-aqueous secondary battery adhesive layer containing the particulate polymer having a core-shell structure where the polymer forming the shell portion does not include an alkylene oxide group-containing monomer unit, and in Comparative Example 2 using the composition for non-aqueous secondary battery adhesive layer containing the particulate polymer not having a core-shell structure, the inkjet discharge characteristics, the adhesive force, and the battery characteristics (output characteristics, resistance increase in the cycle test) cannot be balanced at high levels.

The reason that the adhesive force is slightly deteriorated in Example 5 is presumed to be that the mass proportion of the shell portion having high glass-transition temperature is high.

The reason that the battery characteristics are slightly deteriorated in Examples 6 and 7 is presumed to be that the degree of swelling is high.

The reason that the adhesive force is slightly deteriorated in Example 9 is presumed to be that the hydrophobicity of the polypropylene separator is higher than that of the polyethylene separator.

## INDUSTRIAL APPLICABILITY

According to the present disclosure, it is possible to provide an adhesive layer for non-aqueous secondary battery, which can strongly bond battery members to each other by pressurization at normal temperature while ensuring inkjet discharge characteristics and to provide a composition for non-aqueous secondary battery adhesive layer, which can allow a non-aqueous secondary battery to exert excellent battery characteristics.

According to the present disclosure, it is also possible to provide an adhesive layer for non-aqueous secondary battery, which can strongly bond battery members to each other by pressurization at normal temperature and allow a non-aqueous secondary battery to exert excellent electrical characteristics.

According to the present disclosure, it is also possible to provide a laminate for non-aqueous secondary battery, which can allow a non-aqueous secondary battery to exert excellent electrical characteristics.

According to the present disclosure, it is also possible to provide a non-aqueous secondary battery with excellent electrical characteristics.

According to the present disclosure, it is also possible to provide a method of producing an adhesive layer for non-aqueous secondary battery, which can strongly bond battery members to each other by pressurization at normal temperature and allow a non-aqueous secondary battery to exert excellent electrical characteristics.

According to the present disclosure, it is further possible to provide a method of producing a laminate for non-aqueous secondary battery, which can allow a non-aqueous secondary battery to exert excellent electrical characteristics.

## REFERENCE SIGNS LIST

| | |
|---|---|
| 10A | first separator web |
| 20A | negative electrode web |
| 30A | second separator web |
| 40 | positive electrode |
| 50 | droplet |
| 51 to 54 | coater (nozzle head) |
| 61, 62 | pressure bonding roller |
| 70 | cutting machine |
| 91 | conveying roller |
| 92 | heating roller |
| 300 | particulate polymer |
| 310 | core portion |
| 3105 | outer surface of the core portion |
| 320 | shell portion |

## Claims

1. A composition for non-aqueous secondary battery adhesive layer, comprising a particulate polymer, wherein

   the particulate polymer has a core-shell structure that includes a core portion and a shell portion partially covering an outer surface of the core portion, and
   the shell portion is formed of a polymer including an alkylene oxide group-containing monomer unit.

2. The composition for non-aqueous secondary battery adhesive layer according to claim 1, wherein the polymer forming the shell portion includes the alkylene oxide group-containing monomer unit in a proportion of 3 mass% or more and 60 mass% or less.

3. The composition for non-aqueous secondary battery adhesive layer according to claim 1, wherein the polymer forming the shell portion includes an aromatic vinyl monomer unit in a proportion of 35 mass% or more and 96 mass% or less.

4. The composition for non-aqueous secondary battery adhesive layer according to claim 1, wherein the core portion is formed of a polymer including a (meth)acrylic acid ester monomer unit in a proportion of 50 mass% or more and 98 mass% or less.

5. The composition for non-aqueous secondary battery adhesive layer according to claim 1, wherein a polymer forming the core portion has a glass-transition temperature of -50°C or more and 25°C or less, and the polymer forming the shell portion has a glass-transition temperature of 50°C or more and 200°C or less.

6. The composition for non-aqueous secondary battery adhesive layer according to claim 5, wherein the polymer forming the core portion has a glass-transition temperature of -40°C or more and 25°C or less.

7. The composition for non-aqueous secondary battery adhesive layer according to claim 1, wherein the particulate polymer has a volume-average particle diameter of 100 nm or more and 1500 nm or less.

8. An adhesive layer for non-aqueous secondary battery being formed using the composition for non-aqueous secondary battery adhesive layer according to any one of claims 1 to 7.

9. A method of producing an adhesive layer for non-aqueous secondary battery, the method comprising:

   applying the composition for non-aqueous secondary battery adhesive layer according to any one of claims 1 to 7 onto a substrate by an inkjet method; and
   drying the composition for non-aqueous secondary battery adhesive layer applied onto the substrate.

10. A laminate for non-aqueous secondary battery, comprising an electrode and a separator, wherein
    the electrode and the separator are bonded to each other via the adhesive layer for non-aqueous secondary battery according to claim 8.

11. A method of producing a laminate for non-aqueous secondary battery, the method comprising:

    supplying an adhesive material to at least one affixing surface of an electrode and a separator; and
    affixing the electrode and the separator by pressurization at normal temperature via the affixing surface to which the adhesive material has been supplied, wherein
    the adhesive material is formed using the composition for non-aqueous secondary battery adhesive layer according to any one of claims 1 to 7.

12. A non-aqueous secondary battery comprising the laminate for non-aqueous secondary battery according to claim 10.

FIG. 1

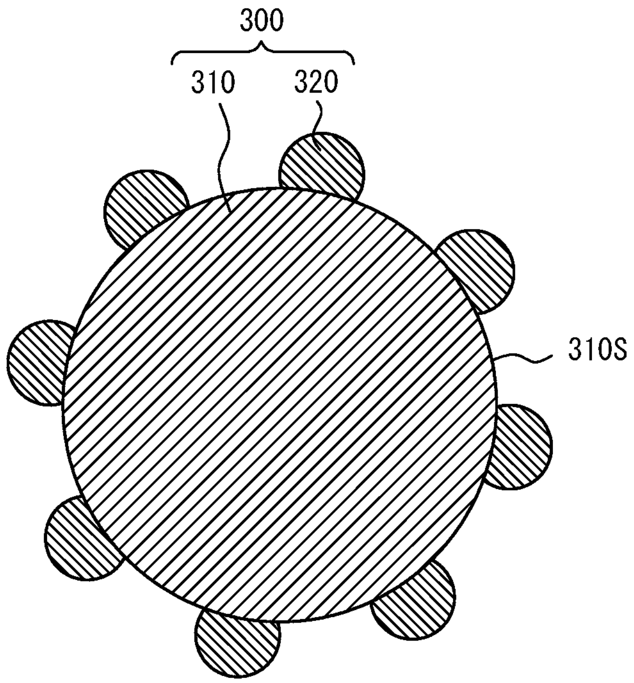

FIG. 2

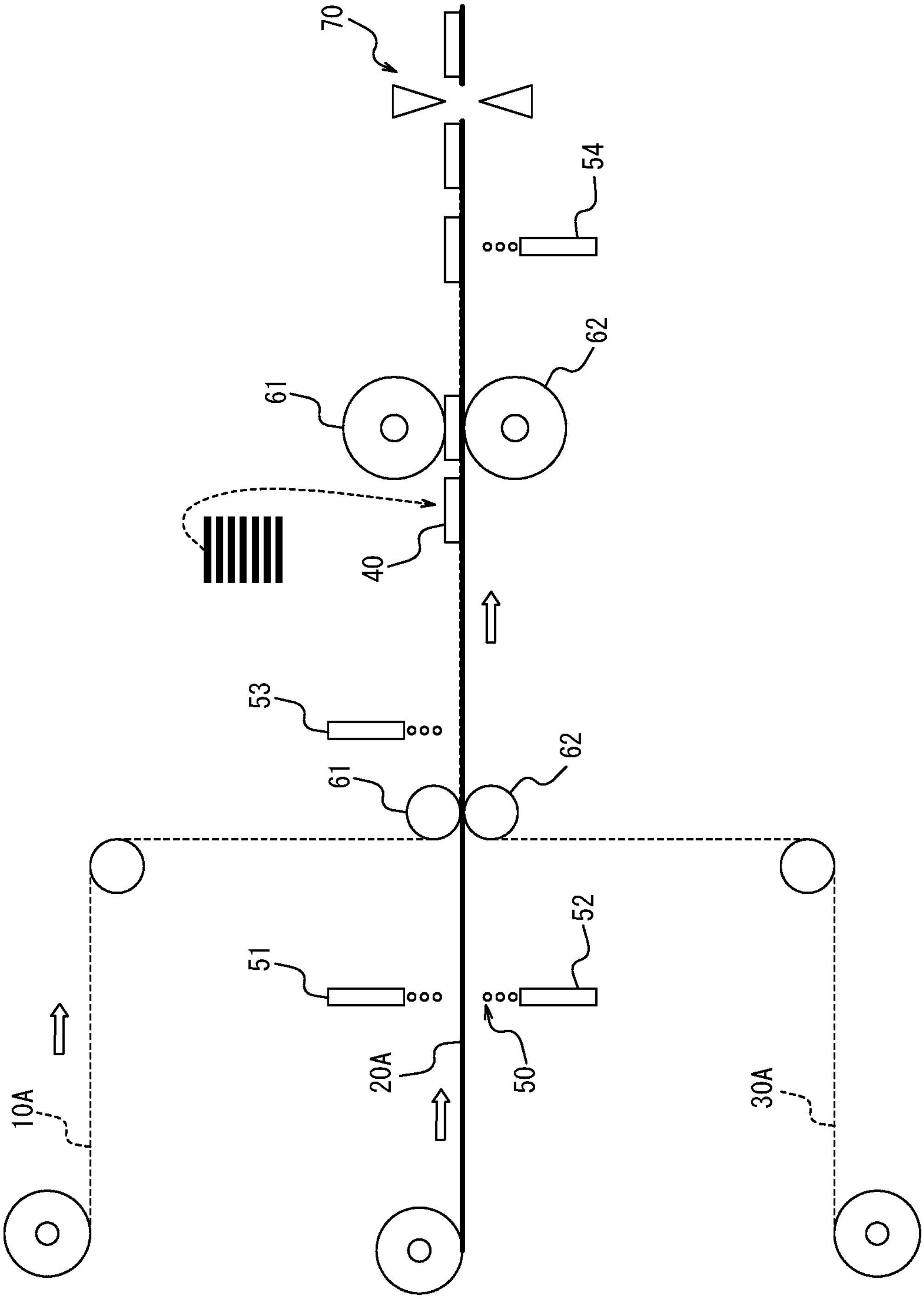

FIG. 3

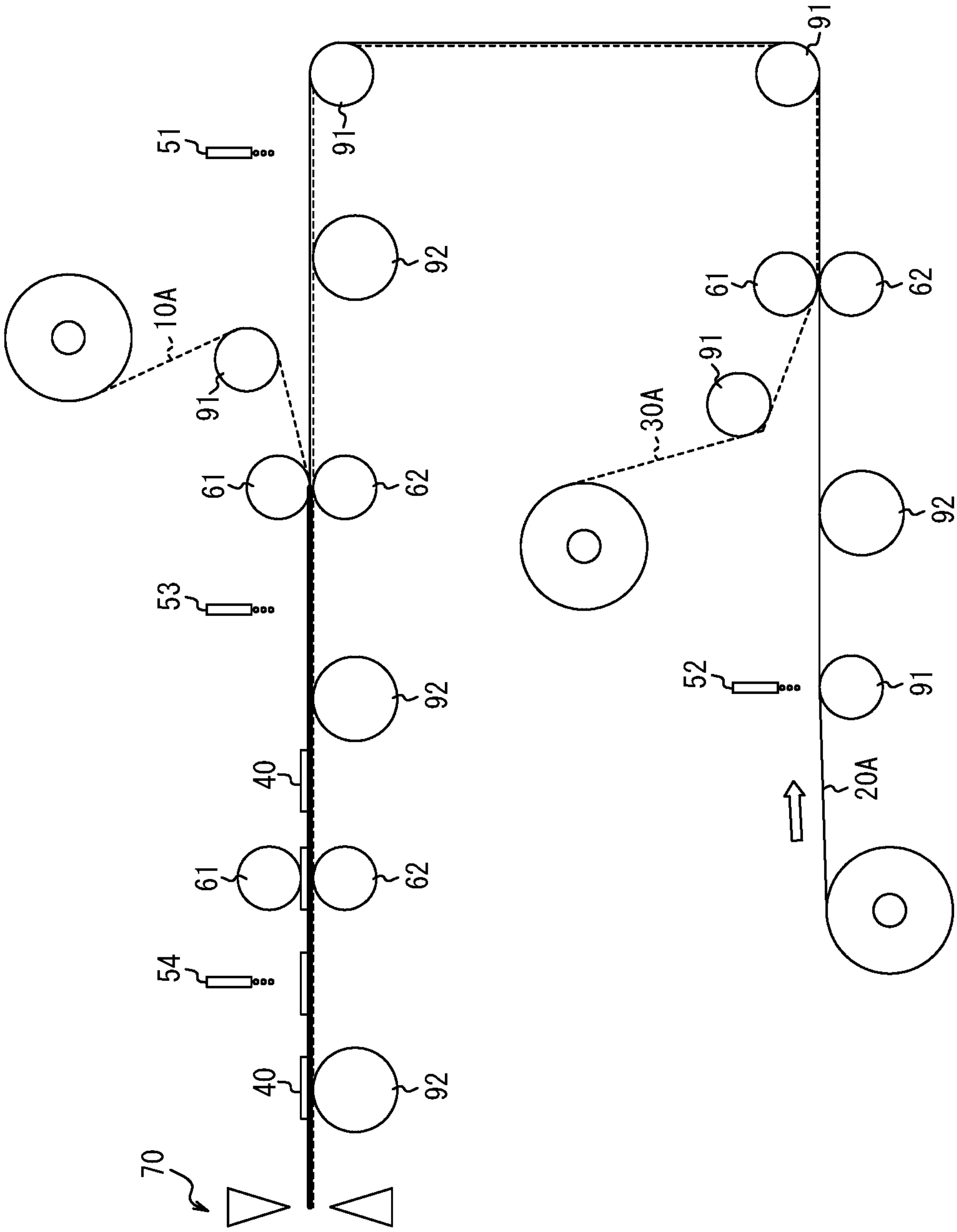

10A
20A
30A
40
40
51
52
53
54
61
61
61
62
62
62
70
91
91
91
91
91
91
92
92
92
92

## INTERNATIONAL SEARCH REPORT

International application No.
**PCT/JP2022/018968**

**A. CLASSIFICATION OF SUBJECT MATTER**

***H01M 4/13***(2010.01)i; ***H01M 4/139***(2010.01)i; ***H01M 10/058***(2010.01)i
FI: H01M10/058; H01M4/139; H01M4/13

According to International Patent Classification (IPC) or to both national classification and IPC

**B. FIELDS SEARCHED**

Minimum documentation searched (classification system followed by classification symbols)

H01M4/13; H01M4/139; H01M10/058

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/044912 A1 (ZEON CORPORATION) 07 March 2019 (2019-03-07)<br>claim 1 | 1-12 |
| A | WO 2014/045586 A1 (PANASONIC INTELLECTUAL PROPERTY MANAGEMENT CO., LTD.) 27 March 2014 (2014-03-27)<br>claims, paragraph [0007] | 1-12 |
| A | WO 2012/173089 A1 (ZEON CORPORATION) 20 December 2012 (2012-12-20)<br>claims | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 June 2022** | **05 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/018968**

| Patent document cited in search report | Publication date (day/month/year) | Patent family member(s) | Publication date (day/month/year) |
|---|---|---|---|
| WO 2019/044912 A1 | 07 March 2019 | US 2020/0227712 A1<br>claim 1<br>EP 3678223 A1<br>CN 111033814 A<br>KR 10-2020-0044797 A | |
| WO 2014/045586 A1 | 27 March 2014 | US 2015/0207167 A1<br>claims, paragraph [0009] | |
| WO 2012/173089 A1 | 20 December 2012 | US 2014/0127579 A1<br>claims | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019221056 A
- WO 2020045246 A
- WO 2012115096 A
- JP 2013145763 A